# EUROPÄISCHE PATENTSCHRIFT

(11) **EP 3 625 872 B1**
(45) Veröffentlichungstag und Bekanntmachung des Hinweises auf die Patenterteilung: **06.11.2024**
(21) Anmeldenummer: 18725205.1
(22) Anmeldetag: 16.05.2018
(51) Int. Cl.: H02J 50/90, H02J 3/00

(54) **ENERGIEVERTEILVORRICHTUNG**
POWER DISTRIBUTION APPARATUS
DISPOSITIF DE DISTRIBUTION D'ÉNERGIE

(30) Priorität: 16.05.2017 DE 102017110584
(43) Veröffentlichungstag der Anmeldung: 25.03.2020
(73) Patentinhaber: Enersyst UG, 93142 Maxhütte-Haidhof (DE)
(72) Erfinder: STEGER, Josef, 92648 Vohenstrau (DE)
(74) Vertreter: Hannke Bittner & Partner mbB Regensburg
(86) Internationale Anmeldenummer: PCT/EP2018/062777
(87) Internationale Veröffentlichungsnummer: WO 2018/210948

(56) Entgegenhaltungen:
- US-B1- 6 967 462

## Beschreibung

Die Erfindung betrifft eine Energieversorgungsvorrichtung zum Versorgen zumindest eines von dieser Energieversorgung beabstandeten Geräts mit elektrischer Energie nach dem Oberbegriff des Anspruchs 1.

Die Versorgung von technischen Geräten und Systemen mit elektrischer Energie erfolgt derzeit überwiegend drahtgebunden über Versorgungsleitungen (Kabel) bzw. mit Batterien oder wiederaufladbaren Akkus. Bei drahtgebundener Versorgung besteht das Problem, dass man bzgl. der Platzierung von Geräten auch die Anschlussmöglichkeit zur elektrischen Versorgung berücksichtigen muss bzw. daran gebunden ist. Dies bedeutet möglicherweise Kosten bei Änderung der Anschlussmöglichkeit an Gebäuden, sowie auch eine Einschränkung des Komforts bzw. der Mobilität (Geräte-Platzierung, Kabelverlegung, Platzbedarf, Sicherheit, unterschiedliche Anschlüsse, Netzteile). So müssen beispielsweise Mobilfunkgeräte bzw. Mobiltelefone zum Laden üblicherweise an eine Dockingstation oder ein Ladekabel angeschlossen werden.

Bei Batterieversorgung müssen laufend neue Batterien gekauft und die Altbatterien entsorgt werden. Das bedeutet auch eine Einschränkung beim Gerätedesign, da die Geräte so konstruiert sein müssen, dass die Batterien vom Anwender problemlos getauscht werden können. Bei Verwendung von Akkus müssen die Akkus so groß dimensioniert werden, dass zumindest ein längerer Betrieb ohne Aufladung möglich ist. Die Aufladung erfolgt meist über eine Ladebuchse per Kabel (manuelles Kontaktieren) mittels Ladenetzteil, oder die Akkus müssen zum Laden aus dem Gerät entnommen werden.

Daneben sind auch Systeme zur drahtlosen Ladung von Geräten z. B. aus der Druckschrift US 6 967 462 B1 bekannt. Dabei muss jedoch das zu ladende Gerät grundsätzlich in einer vorgegebenen Position oder in einem Ladeteil positioniert sein.

Es ist demnach eine Aufgabe der vorliegenden Erfindung, die Mobilität und/oder Ortsunabhängigkeit derartiger batteriebetriebener Geräte oder allgemein elektrisch betriebener Geräte, insbesondere auch während des Ladens und/oder im Betrieb zu erhöhen. Diese Aufgabe wird gelöst, in dem wenigstens eine Energieversorgungsvorrichtung bereitgestellt wird, welche technische Geräte bzw. Systeme insbesondere mittels eines universellen/standardisierten und anwendungsunabhängigen drahtlosen Energieversorgungsnetzwerks mit elektrischer Energie versorgt.

Diese Aufgabe wird genauer durch die Merkmale des Anspruchs 1 gelöst. Weiterhin wird die Aufgabe durch ein Verfahren gemäß Anspruch 10 gelöst.

Weitere vorteilhafte Ausgestaltungen sind Gegenstand der Unteransprüche.

Erfindungsgemäß ist eine Energieversorgungsvorrichtung zum Versorgen zumindest eines von dieser Energieversorgung beabstandeten Geräts mit elektrischer Energie vorgesehen, wobei die Energieversorgungsvorrichtung an einem Energienetz anschließbar ist und/oder selbst von einer insbesondere beabstandeten Energieversorgungseinrichtung insbesondere drahtlos versorgt wird, umfassend zumindest eine Positionserfassungseinrichtung zum Erfassen einer räumlichen oder geometrischen Position des zumindest einen Gerätes und/oder einer Ausrichteinheit zum Ausrichten eines Energiestrahls, der besonders bevorzugt von einer Energieversorgungseinrichtung zu dem zu versorgenden Gerät reicht. Daneben kann die Positionserfassungseinrichtung auch eine räumliche oder geometrische Position der Energieversorgungseinrichtung erfassen. Hierbei sei angemerkt dass eine räumliche und geometrische Position gleichermaßen zu verstehen sind.

Es wäre dabei ebenso denkbar, dass die Position des zu versorgenden Geräts bestimmt wird als auch, dass die Position der Energieversorgungseinrichtung bestimmt wird. Dabei wäre es möglich, dass eine Absolutposition dieser Einrichtungen im Raum bestimmt werden, es wäre jedoch auch möglich, dass eine relative Position des zu versorgenden Geräts gegenüber der Energieversorgungseinrichtung und/oder die relativ Position der Energieversorgungsvorrichtung gegenüber dem zu versorgenden Gerät bestimmt wird.

Die Energieversorgungsvorrichtung und/oder ein Energiestrahl der Energieversorgungseinrichtung ist derart auf das zumindest eine Gerät ausrichtbar, dass Energie, beispielsweise elektrische Energie von der Energieversorgungsvorrichtung drahtlos an das zu versorgende Gerät übertragbar ist. Unter einer Übertragung von elektrischer Energie wird dabei verstanden, dass letztlich dem zu versorgenden Gerät elektrische Energie zugeführt wird. Dabei muss jedoch die eigentlich übertragene Energie keine elektrische Energie sein, sondern es ist möglich, dass die übertragene Energie in elektrische Energie umgewandelt wird.

Die Positionserfassungseinrichtung kann dabei in dem zu versorgenden elektrischen Gerät und/oder in der Energieversorgungseinrichtung vorgesehen sein. Dabei wäre es auch möglich, dass die Position durch das zu versorgende Gerät erfasst wird und an die Energieversorgungseinrichtung kommuniziert und/oder übermittelt wird. Diese Kommunikation und/oder Übermittlung kann dabei direkt und/oder über eine übergeordnete Kommunikationseinheit an die Energieversorgungseinrichtung und/oder direkt an eine übergeordnete Dateneinheit per Datenkommunikation stattfinden.

Denkbar wäre auch, dass von einer Energieversorgungsvorrichtung mehrere Geräte versorgt werden können. Bei der Versorgung mehrerer Geräte kann die Energieversorgungs-vorrichtung mehrere Energiestrahlungseinheiten mit fester und/oder dynamischer Ausrichtung eines Energiestrahles beinhalten. Weiterhin ist es vorteilhaft, dass die Energieversorgungsvorrichtung und/oder die Geräte jeweils einen internen Energiespeicher aufweisen, um möglicherweise auftretende Verbindungsabbrüche bei der Energieversorgung zwischen Energienetz und/oder übergeordneter Energieversorgungsvorrichtung und Energieversorgungsvorrichtung oder zwischen der Energieversorgungsvorrichtung und den Geräten und/oder mit anderen Energieversorgungseinrichtungen kompensieren zu können. Diese Energiespeicher können entweder parallel zu dem Betrieb des Gerätes bzw. der Energieversorgungsvorrichtung oder in einem Ruhemodus des Gerätes bzw. der Energieversorgungsvorrichtung geladen werden. Bei der Versorgung mehrerer Geräte ist eine dynamisch steuerbare Ausrichtung des Energiestrahles und/ oder Ausrichtung der Energieversorgungsvorrichtung vorteilhaft. Auch können mehrere Energieversorgungseinrichtungen vorgesehen sein. So ist es möglich dass eine Energieversorgungsvorrichtung in ihrer Gesamtheit mehrere Energieversorgungseinrichtungen aufweist, die bevorzugt jeweils dazu geeignet und bestimmt sind, zu versorgende elektrische Geräte mit elektrischer Energie zu versorgen.

Vorteilhaft ist es weiterhin, wenn die Energieversorgungseinheit unterschiedliche Typen von Energiestrahlungseinheiten und/ oder Energieempfängern aufweist und/oder unterschiedliche Applikationen bzw. Geräte mit unterschiedlichen Anforderungen der Energie-Übertragung versorgen kann. So könnten mehrere unterschiedliche Energiesender vorgesehen sein, und beispielsweise Licht unterschiedlicher Wellenlänge ausgegeben werden. Vorteilhaft ist weiterhin ein standardisiertes Verfahren bzgl. der drahtlosen Datenkommunikation und bzgl. der drahtlosen Energieübertragung mit Anpassungsmöglichkeit an die Anforderungen bzw. die Möglichkeiten des Energieempfängers bzw. des zu versorgenden Geräts vorgesehen.

Daneben wäre es auch möglich, dass die Energie zwischen der Energieversorgungs-einrichtung und dem wenigstens einen zu versorgenden Gerät nach wirtschaftlichen und/oder energiespezifischen Kriterien übertragen wird, wie insbesondere aber nicht ausschließlich den Energiekosten, einem aktuellen Wirkungsgrad der Energieübertragung, einer Energieverfügbarkeit, einem Energiebedarf, einem Ladezustand des zu versorgenden Geräts und dergleichen.

Bei einer weiteren bevorzugten Ausführungsform weist das zu versorgende Gerät mehrere Energieempfänger auf. Auf diese Weise ist es möglich, dass das zu versorgende Gerät unterschiedlich positioniert werden kann und dabei jeweils noch Energie aufnehmen kann. Auch könnte das zu versorgende Gerät eine Anzeigeeinrichtung aufweisen, mittels welcher eine exakte Positionierung des zu versorgenden Geräts ermöglicht wird. So könnte beispielsweise dem Benutzer über ein Display des zu versorgenden Geräts angezeigt werden, dass er dieses noch um einen bestimmten Winkel drehen muss um eine ideale Energieübertragung zu erreichen.

Daneben kann das zu versorgende Gerät einen festen bzw. ausrichtbaren Energiekonzentrator und/oder ein energiestrahlleitendes Material insbesondere an dessen Oberfläche bzw. nach außen wirkend (unterhalb der Oberfläche) aufweisen.

Vorteilhaft bei dem zu versorgenden Gerät ist es, wenn das Gerät an mehreren Stellen einen Energieempfänger aufweist, damit die Erreichbarkeit durch den Energiestrahl der Energieversorgungseinrichtung mit möglichst hoher Wahrscheinlichkeit und möglichst unabhängig von der Lage bzw. Position des Gerätes gewährleistet ist.

Der bzw. die Energieempfänger selbst können so ausgestattet sein, dass Sie einen Energiekonzentrator beinhalten, der möglicherweise auf den Energiesender ausrichtbar ist.

Das energieempfangende Gerät kann an der gesamten Oberfläche bzw. an mehreren Stellen der Oberfläche (bzw. nahe der Oberfläche) mit einem energiestrahlleitendem bzw. konzentrierendem Material ausgestattet sein, dass die an der Oberfläche bzw. von außen auftreffende Energie zum Energieempfänger führt (z.B. Lichtkonzentrierender Kunststoff).

So könnten beispielsweise für eine Oberfläche des zu versorgenden Geräts Kunststoffe verwendet werden und insbesondere aber nicht ausschließlich lichtsammelndes Acryl. Dieser Kunststoff ist ein transparenter Kunststoff, der durch die Anreicherung mit Pigmenten und insbesondere mit Tagesleuchtpigmenten die Eigenschaft hat, Licht wie ein Sonnensegel zu sammeln und in bestimmten Bereichen, wie etwa an den Kanten wieder auszugeben. Bei einer weiteren vorteilhaften Ausführungsform weist die Energieempfangs-Vorrichtung, welche beispielsweise Bestandteil des zu versorgenden Geräts sein kann, eine Identifikationseinrichtung auf, welche die empfangenen Energiemengen unterschiedlichen Energieversorgungseinrichtungen zuordnet. Dies kann etwa über eine Positionserfassung der jeweiligen Energieversorgungseinrichtung erfolgen. Bei einer weiteren vorteilhaften Ausführungsform ist die Energieempfangsvorrichtung dazu geeignet und bestimmt, unterschiedliche Energiestrahlungs-Arten zu empfangen.

Bei einer weiteren vorteilhaften Ausführungsform ist die Energieempfangs-Vorrichtung dazu geeignet und bestimmt, die empfangene Strahlungsenergie ohne Wandlung in elektrische Energie einer Energiesende-Vorrichtung zuzuführen und/oder zusätzlich zu der in der Energiesende-Vorrichtung erzeugten Energiestrahlung zur Verfügung zu stellen.

Das Energieversorgungsnetzwerk weist bevorzugt mehrere Energieversorgungsnetzwerkteilnehmer, Energieversorgungseinheiten und/oder Energieempfangseinheiten bzw. zu versorgende Geräte auf. Die Abstimmung dieser Versorgungs- und Empfangseinheiten (d.h. insbesondere zu versorgende Geräte) erfolgt besonders bevorzugt durch drahtlosen Datenaustausch durch ein bevorzugt anwendungsunabhängiges, und besonders bevorzugt durch ein standardisiertes Verfahren zwischen den Teilnehmern direkt und/oder über eine übergeordnete Einheit (z. B. eine Daten- bzw. Steuer- bzw. Regelungseinheit).

Die Energieversorgungseinheit beinhaltet bevorzugt zumindest einen Energiesender und/oder Energiewandler, der insbesondere elektrische Energie in Energiestrahlung wandelt und bei dem die ausgestrahlte Energie insbesondere gebündelt ausgestrahlt wird. Dabei ist es auch denkbar, dass die Energieversorgungseinheit mehrere Energiestrahlen in mehrere Richtungen ausstrahlt. Besonders bevorzugt ist der jeweilige Energiestrahl ablenkbar und/oder dieser Energiestrahl kann in mehrere Energiestrahlen aufgesplittet werden. Bevorzugt handelt es sich bei diesem Energiestrahl um einen Lichtstrahl und/oder um elektromagnetische Strahlung. Weiterhin ist es auch denkbar, dass die aufgesplitteten Energiestrahlen ablenkbar sind. Die Energieempfangseinheit weist bevorzugt mindestens einen Energieempfänger und/oder Energiewandler auf, der die empfangene Energiestrahlung in elektrische Energie wandelt. So kann beispielsweise durch einen solchen Energieempfänger Lichtstrahlung wieder in elektrische Energie umgewandelt werden. Die Energiestrahlung ist bevorzugt gebündelt und/oder ablenkbar.

Bei einer weiteren bevorzugten Ausführungsform weist daher die Energieversorgungseinrichtung eine Energiesendeeinrichtung auf, welche dazu geeignet und bestimmt ist, einen gebündelten Energiestrahl zu erzeugen. Hierbei kann es sich beispielsweise um einen Laser handeln. Dabei ist es denkbar, dass eine Intensität bzw. Leistung dieses Energiestrahls einstellbar ist. Auf diese Weise kann eine Strahlungsenergie ausgesandt und/oder übertragen werden.

Bevorzugt ist dabei die Energieversorgungseinrichtung derart gestaltet, dass der gebündelte Energiestrahl ablenkbar ist und/oder in unterschiedliche Richtungen ausgebbar ist. Bei einer bevorzugten Ausführungsform kann der ausgegebene Energiestrahl auch in unterschiedliche Energiestrahlen bzw. Strahlteile aufgesplittet werden. Dabei ist es etwa möglich dass diese Aufsplittung wellenlängenabhängig erfolgt, es wäre jedoch auch denkbar, dass ein Teil eines Energiestrahls wie etwa eines Laserstrahls bzw. Laserbündels ausgekoppelt wird. Dabei wäre es weiterhin denkbar, dass die aufgesplitteten Energiestrahlen individuell steuerbar und/oder ablenkbar sind. Dies kann beispielsweise bei Lichtstrahlen durch die Verwendung von Polarisatoren erfolgen.

Bei einer weiteren vorteilhaften Ausführungsform ist der Energiestrahl, bevorzugt durch eine Multiplexsteuerung (insbesondere ein Zeitmultiplex) abwechselnd auf mehrere beabstandete Geräte gleichzeitig bzw. quasi gleichzeitig ausrichtbar. Bevorzugt weist die Energieversorgungseinrichtung eine Energiesendeeinrichtung und oder Energiestrahlungseinrichtung auf, welche mehrere Energiestrahlen mit gleicher oder ähnlicher Ausrichtung oder auch mehrere Energiestrahlen (bzw. Energiebündel) mit unterschiedlicher Ausrichtung erzeugen kann. Bei einer weiteren vorteilhaften Ausführungsform weist die Energieversorgungseinrichtung eine Energiesende-Vorrichtung auf, welche Energiestrahlen bestehend aus mehreren Energiestrahlungsarten erzeugt.

Bei einer weiteren bevorzugten Ausführungsform weist die Energieversorgungseinrichtung eine Steuerungseinrichtung zum Steuern der Energiesende-Vorrichtung und/oder Energiestrahlungseinrichtung auf. Diese Steuerungseinrichtung ist dabei bevorzugt dazu geeignet und bestimmt, wenigstens einen Parameter des Energiestrahls zu steuern, insbesondere aber nicht ausschließlich eine Art des Energiestrahls, eine Dimension des Energiestrahls, eine geometrische Form des Energiestrahls, einen Fokus des Energiestrahls und/oder eine Energiedichte des Energiestrahls.

Weiterhin ist es auch möglich und bevorzugt, dass eine Energieversorgungseinheit mehrere Energieempfänger mit Energie versorgt. Umgekehrt ist es auch denkbar, dass ein Energieempfänger durch mehrere Energieversorgungseinheiten mit Energie versorgt wird. Dabei kann mittels einer Auswahleinrichtung ausgewählt werden, welche Energieversorgungseinheit wieviel Energie zur Verfügung stellen soll. So wäre es beispielsweise möglich, dass unterschiedliche Energieversorgungseinrichtungen Energie zu unterschiedlichen Preisen zur Verfügung stellen. In diesem Falle kann der Energieempfänger und/oder eine übergeordnete Steuereinheit auswählen, von welcher Energieversorgungseinheit er die Energie und insbesondere auch wieviel Energie er empfangen möchte.

Die Versorgung mehrerer Energieempfangseinheiten durch eine Energieversorgungseinheit erfolgt z.B. durch mehrere Energiesender innerhalb der Energieversorgungseinheit und/oder durch Aufsplitten des Energiestrahls eines Energiesenders in mehrere Energiestrahlen und Ausrichtung dieser Energiestrahlen auf die jeweiligen Energieempfangseinheiten, oder durch Zeitmultiplex eines Energiesenders bzw. eines Energiestrahles mittels zeitlichem Wechsel der Ausrichtung des Energiestrahles zwischen mehreren Energieempfangseinheiten.

Es ist auch möglich, dass eine bestimmte Energieempfangseinheit zeitlich abwechselnd und/oder gleichzeitig von unterschiedlichen Energieversorgungseinheiten mit Energie versorgt wird. Dabei ist es möglich, dass diese Energieempfangseinheit zeitlich überlappend, teilweise zeitlich überlappend oder in unterschiedlichen Zeiträumen von unterschiedlichen Energieversorgungseinheiten mit Energie versorgt wird.

Unter einer Positionserfassungseinrichtung wird dabei eine Einrichtung verstanden, welche dazu geeignet und bestimmt ist die Position eines Geräts im Raum und insbesondere relativ zu der Energiequelle bzw. Energieversorgungseinrichtung zu erfassen. Weiterhin ist es auch möglich, dass eine Position des zu ladenden und/oder zu versorgenden Geräts, wie etwa eine Relativposition zu einem vorherigen Zeitpunkt und/oder eine Schwenkposition oder dergleichen erfasst wird, insbesondere eine Relativposition des Geräts gegenüber einer Unterlage (wie etwa einem Tisch). So kann beispielsweise erfasst werden, ob ein Mobilfunkgerät mit seinem Display noch oben oder nach unten auf einem Tisch liegt.

Vorteilhaft ist weiterhin, dass beispielsweise bei dem Betrieb von Kleingeräten bzw. Geräten mit kleinem oder mittlerem Energiebedarf keine nachträgliche Elektroinstallation notwendig ist. Darüber hinaus ist eine flexiblere Verwendung von Elektrogeräten und eine freie Positionierung von Elektrogeräten im Raum möglich, da die Positionierung der Geräte nicht an vorhandene Anschlüsse an das Stromnetz gebunden ist und für Abrechungszwecke eine eindeutige Zuordnung des jeweiligen Energiesenders und des Energieempfängers möglich ist. Zudem bewirkt eine derartige Anordnung weniger Fehlerquellen bei der Energieversorgung und eine höhere Sicherheit, da kein Energieversorgungskabel, kein Stecker, bzw. kein Steckernetzteil notwendig ist. Dadurch können Kurzschlüsse, Stromschläge sowie die Gefahr eines Kabelbrandes vermieden werden. Weiterhin ist bei der Produktion solcher Geräte vorteilhaft, dass Rohstoffe für Stecker oder dergleichen eingespart werden können.

Kleinere Energiedichten, welche für den Menschen und/oder Lebewesen und/oder Gegenstände keine Gefahr darstellen, können insbesondere ohne zusätzliche Sicherheitsmechanismen übertragen werden. Größere Energiedichten werden vorteilhaft nur direkt (z.B. unter Ausschluss der Energieübertragung durch reflektierte oder abgelenkte Energiestrahlen) zur Empfangseinrichtung bzw. dem zu versorgenden Gerät übertragen. Dabei ist es auch möglich, dass die Energieübertragung und/oder die zu übertragende Energiemenge überwacht wird und gegebenenfalls Parameter, welche für diese Energieübertragung und/oder diese Energiemenge charakteristisch sind, wie etwa eine Strahlungsintensität, angepasst werden.

Bei einer weiteren vorteilhaften Ausführungsform weist die Vorrichtung ein Erfassungsmittel auf, welches dazu geeignet und bestimmt ist, Fremdkörper in einem Übertragungsweg zwischen der Energieversorgungseinrichtung und dem zu versorgenden Gerät zu erfassen. Derartige Fremdkörper können die Energieübertragung blockieren und/oder verhindern. Wird ein Fremdkörper im Übertragungsweg registriert wird bevorzugt die Energiedichte zurückgefahren. Des Weiteren kann eine Warnung an den Nutzer bzw. an andere Energieversorgungsvorrichtungen ausgegeben werden, wenn eine Unterversorgung eines Gerätes erkannt wird oder absehbar ist und/oder wenn ein Fremdkörper erkannt wird. Daneben kann ein Hinweis ausgegeben werden, dass ein vorhandener Fremdkörper zu beseitigen ist.

Bei drohender Unterversorgung eines zu versorgenden Gerätes kann eine gezielte Energieversorgung dieses speziellen Gerätes initiiert werden. Bei funktionsgefährdender Unterversorgung kann das Gerät beispielsweise auch in einen Ruhemodus versetzt werden, in welchem, z.B. durch Energy-Harvesting-Methoden, auch kleinere und kleinste Energiemengen aufgenommen und gespeichert werden, solange bis eine Energiemenge für Positionsbestimmung, Datenübertragung bzw. Positionsscan wieder ausreicht.

In einer bevorzugten Ausführungsform ist die Energieversorgungsvorrichtung mobil oder ortsfest angeordnet. Eine mobile Energieversorgungsvorrichtung ist vorteilhaft, falls das zu versorgende Gerät nicht ortsfest ausgestaltet ist und häufig ein Positionswechsel durchgeführt wird oder aber ein zu versorgendes Gerät an einer ortsfesten Position von einer bestimmten Position der Energieversorgungseinrichtung nicht oder nur unzureichend erreichbar ist. So kann durch eine mobile Energieversorgungsvorrichtung an jedem beliebigen Ort im Raum eine Energieversorgung gewährleistet werden. Dabei kann diese Energieversorgungseinrichtung in einem vorgegebenen Bereich bewegbar sein bzw. einen vorgegebenen Aktionsradius aufweisen.

Eine ortsfeste Energieversorgungsvorrichtung ist im Gegensatz dazu dann vorteilhaft, wenn die zu versorgenden Geräte ebenfalls ortsfest im Raum angeordnet sind, und die jeweilige Energieversorgungsvorrichtung bei der Installation so auf das jeweilige Gerät ausgerichtet werden kann, dass eine effiziente Energieversorgung ermöglicht wird und/oder das zu versorgende Gerät von einer ortsfesten Position der Energieversorgungseinrichtung aus gut erreichbar ist.

Bei einer bevorzugten Ausführungsform ist die Positionserfassungseinrichtung aus einer Gruppe von Positionserfassungseinrichtungen ausgewählt, welche Kameras, die Beacon-Technologie, einen GPS-Sensor, GSM, WLAN, Bluetooth einen Beschleunigungssensor, Neigungssensoren, einen Kompass, Gyrometer, Höhenmesser oder andere bekannte Positionserfassungsgeräte umfasst. Auf diese Weise kann eine eindimensionale und/oder zweidimensionale und/oder eine dreidimensionale Positionserfassung (insbesondere der Energieversorgungsvorrichtung und/oder insbesondere des zu ladenden bzw. zu versorgenden Geräts durchgeführt werden. Daneben kann auch mittels einer Erfassungseinrichtung wie insbesondere aber nicht ausschließlich einer Kamera ein Umfeld bzw. eine Umgebung des zu versorgenden Geräts erkannt oder erfasst werden. So kann etwa ein Energie-Netzwerk-Teilnehmer ein, zwei, drei oder mehrdimensional eine Umgebung des zu versorgenden Geräts abscannen, wobei dieses Abscannen etwa zu unterschiedlichen Zeiten oder in unterschiedlichen Zeitabständen erfolgen kann.

Weiter ist bevorzugt, dass die Position des beabstandeten Gerätes autonom erfassbar ist. Dies bedeutet, dass die Energieversorgungsvorrichtung selbständig den Raum mittels der zuvor genannten Positionserfassungseinrichtungen nach Geräten absuchen und die Geräte auch erfassen und sich entsprechend ausrichten kann. Dies bietet unter anderem den Vorteil, dass bei Verändern der Position der Geräte die Energieversorgungsvorrichtung nicht händisch neu ausgerichtet werden muss, sondern die Energieversorgungsvorrichtung selbständig das Gerät wieder erfasst und sich dementsprechend ausrichtet.

Darüber hinaus wäre es durchaus denkbar, dass das zu versorgende Gerät seine Position fortlaufend oder auch in zeitlichen Abständen erfasst und der Energieversorgungsvorrichtung und/oder einer übergeordneten Einheit (beispielsweise einer Daten-, Steuer- und Regelungseinheit) über eine Datenkommunikation übermittelt beziehungsweise mitteilt.

Bei einer weiteren vorteilhaften Ausführungsform ist die Positionserfassungseinrichtung dazu geeignet und bestimmt, die absolute Geräteposition zu bestimmen. Es wäre aber auch denkbar, dass die relative Geräteposition zu einem anderen Gerät und/oder zu einem Referenzpunkt bestimmt wird. Weiterhin wäre es auch möglich dass die Positionserfassungseinrichtung eine Zeiterfassungseinrichtung aufweist. Auf diese Weise wäre es möglich, dass eine relative Geräteposition zu einer vorangegangenen Geräteposition bestimmt wird. Daneben kann die Positionserfassungseinrichtung auch dazu geeignet und bestimmt sein, eine Lage des Geräts (Drehstellung, Schwenkstellung und dgl.) oder eine Ausrichtung des Geräts zu bestimmen.

Daneben wäre es auch denkbar, dass die Position der Empfangs-Vorrichtungen durch ein Scannen des Umfeldes erfolgt. So könnte etwa das Scannen nach Energieempfängern mittels eines gebündelten Strahles und Ablenkung des Strahles in einem vorgesehenen Bereich erfolgen. Das Scannen kann dabei bevorzugt 1-dimensional und/oder 2-dimensional und/oder 3-dimensional erfolgen.

Bei einer bevorzugten Ausgestaltung wäre es auch denkbar, dass die Energieempfangs-Vorrichtung fortlaufend und/oder in zeitlichen Abständen die Energiedichte des Scansignals über die Zeit misst und die Messwerte über die Zeit an die Energiesende-Vorrichtung und/oder an eine übergeordnete Einheit (z.B. eine Daten-, Steuer-, Regelungseinheit) überträgt. Aus den empfangenen Messwerten über die Zeit und der Strahlablenkung über die Zeit kann bevorzugt das System die Position des Energieempfängers ermitteln. Zum Scannen können auch unterschiedliche (auch mehrere) Strahlungsarten verwendet werden.

Daneben kann, wie oben erwähnt, die Positionserfassung mittels einer oder mehrerer Kameras erfolgen. Die Kamera bzw. Kameras können sichtbares Licht und/oder unsichtbares Licht erkennen. Die Auswertung des Bildsignales kann mittels Bilderkennung erfolgen. Zur besseren Identifikation der Empfangsvorrichtungen kann die Energieempfangs-Vorrichtung an der Energieempfänger-Position ein für die Kamera gut erkennbares bzw. auswertbares Signal aussenden.

Weiter kann die Positionserfassung eines zu versorgenden Gerätes und/oder einer Energieversorgungsvorrichtung auch mittels Ortung durch beispielsweise mehrere Energieversorgungsvorrichtungen erfolgen.

Weiterhin können passive Versorgungseinheiten(alternativ oder zusätzlich) vorgesehen sein, welche nur die Ausrichtung der von einer Versorgungseinheit empfangenen Energiestrahlung auf einen oder mehrere Energieempfänger neu ausrichten. Daneben ist auch eine Kombination aus aktiven und passiven Versorgungseinheiten möglich und bevorzugt.

Bevorzugt fordert das Gerät bei Bedarf unter Berücksichtigung von vorgegebenen Parametern eine Leistung und/oder Energiemenge von der Energieversorgungsvorrichtung direkt und/oder über eine übergeordnete Einheit (z.B. eine Daten-/ Steuerungs-/ Regelungseinheit) an bzw. die Energieversorgungsvorrichtung versorgt das Gerät automatisch unter Berücksichtigung der vorgegebenen Parameter des Gerätes oder der Energieversorgungsvorrichtung. Parameter sind technische und/oder wirtschaftliche und/oder sonstige Parameter.

Denkbar wäre auch, dass alle Teilnehmer des Energienetzwerkes (Energieversorgungsvorrichtung bzw. Geräte) untereinander Energie austauschen können.

Bei einer weiteren bevorzugten Ausführungsform weist die Energieversorgungseinrichtung eine Identifikationseinrichtung zum Identifizieren des zu ladenden und/oder zu versorgenden Geräts auf. So kann beispielsweise ein zu ladendes und/oder zu versorgendes Mobilfunkgerät identifiziert werden und beispielsweise überprüft werden, ob dieses spezielle Gerät für eine Aufladung bestimmt ist. Auf diese Weise ist es möglich, dass etwa durch einen Benutzer ausgewählt werden kann, welche Geräte geladen werden sollen und welche nicht. Auch kann zugeordnet werden, welchem Gerät welche Energieart und/oder Energiemenge, insbesondere von einer bestimmten Versorgungseinheit zugeführt wurde. Diese Identifikationseinrichtung kann etwa ein von dem zu ladenden Gerät ausgesendetes Signal auswerten, wie etwa ein Bluetooth Signal oder ein über WLAN übertragenes Signal.

Bei einer weiteren bevorzugten Ausführungsform weist die Energieversorgungseinrichtung eine Sendeeinrichtung zum Aussenden von Energie auf. Diese Energie kann dabei in unterschiedlicher Weise ausgesendet werden und insbesondere gerichtet ausgesendet werden. Weiter bevorzugt ist, dass die Energie mittels gerichteter Energiestrahlung und/oder Energiebündel übertragbar ist. Vorteilhaft ist die Energiestrahlung aus einer Gruppe von Energieträgern ausgewählt, welche Licht, Laser, Mikrowellen, Funkstrahlung, induktive Strahlung, Maser, Ultraschall, Röntgenstrahlung, Radarstrahlung, oder kapazitive Strahlung umfasst. Eine drahtlose Energieübertragung wird derzeit meist durch ungerichtete (nicht gebündelte/ nicht fokussierte) Strahlung (beispielsweise induktiv) realisiert und die Platzierung der Geräte ist derzeit meist nur in einem engen Bereich möglich (Ladeschale, Ladeposition usw.).

Des Weiteren sind die derzeitigen Lösungen sehr anwendungsspezifisch. Durch die hier vorgeschlagene Lösung ist ein Laden und/oder Betreiben und/oder Versorgen von elektrischen Geräten über eine größere Distanz automatisiert beziehungsweise autonom möglich. Das jeweils zu ladende und/oder zu versorgende Gerät kann eine Empfangseinrichtung zum Empfangen der ausgestrahlten Energiebündel aufweisen. Weiterhin kann das zu ladende und/oder zu versorgende Gerät eine Energiewandlereinrichtung aufweisen, welche die übertragene Energieform in elektrische Energie umwandelt. Bei Licht kann es sich sowohl um Licht im sichtbaren Wellenlängenbereich als auch um Licht im nicht sichtbaren Wellenlängenbereich wie etwa UV oder IR Licht handeln Daneben ist auch die Verwendung von Laserlicht denkbar.

Die Versorgungseinheit sendet die Energiestrahlung bevorzugt gebündelt aus und richtet den Energiestrahl auf ein zu versorgendes Gerät oder mehrere zu versorgende Geräte. Damit weist bevorzugt die von der Versorgungseinheit ausgehende Strahlung eine Vorzugsrichtung im Raum auf. Möglich ist, dass die Art der Strahlungsenergie und/oder die Form des Energiebündels (etwa eines Lichtbündels) vorgegeben werden. Möglich ist weiterhin, dass die Energieversorgungseinheit eine oder mehrere Arten der Strahlungsenergie aussenden kann. So ist es beispielsweise möglich, dass die Energieversorgungseinheit Licht unterschiedlicher Wellenlängen ausgeben kann. Auch wäre es möglich, dass die Energieversorgungseinheit unterschiedliche Strahlungsgattungen ausgibt, wie etwa Licht, Ultraschall, Mikrowellen und dergleichen.

Daneben kann auch die zu übertragende Energiedichte bzw. Strahlungsintensität und/oder die Energiemenge vorgegeben werden. Dabei ist es insbesondere möglich, dass etwa die Energiedichte und/oder die Energiemenge durch das zu versorgende Gerät vorgegeben werden. So kann es beispielsweise gewünscht sein, dass ein zu versorgendes Gerät nur bis zu einem bestimmten Ladezustand, etwa zu 50% aufgeladen werden soll und, sobald dies erreicht wurde, die Energieübertragung abgebrochen wird. Auch wäre es denkbar, dass durch das zu versorgende Gerät von Anfang an die zu übertragende Energiemenge festgelegt wird. Dabei wäre es denkbar, dass diese Parameter von dem zu versorgenden Gerät vorgegeben werden. Zusätzlich oder alternativ ist es denkbar, dass diese Parameter von der Energieversorgungseinrichtung und/oder von einer übergeordneten Einheit (z.B. einer Daten-/ Steuer-/ Regelungseinheit) vorgegeben werden.

Die Ausrichtung der gerichteten Energiestrahlung wird automatisch an die Position des Gerätes angepasst und nachgeführt. Bei mehreren Energieversorgungsvorrichtungen werden die von der Energieversorgungsvorrichtung zu übertragenden Leistungen und/oder Energiemengen nach Energiebedarf und/oder Effizienz und/oder Wirtschaftlichkeit und/oder willkürlich (Zufall) und/oder nach anderen Kriterien gesteuert.

Bevorzugt weist das wenigstens eine zu versorgende und/oder zu ladende Gerät eine kommunikative Verbindung zu der Energieversorgungsvorrichtung auf und/oder kann eine derartige Verbindung herstellen.

Bevorzugt sind über die kommunikative Verbindung Daten an die Energieversorgungsvorrichtung übertragbar, welche für eine Energieversorgung des Geräts charakteristisch sind, wie insbesondere, aber nicht ausschließlich Parameter des Energieempfängers, eine Position des Gerätes, ein Wirkungsgrad, eine maximale Leistung, eine benötigte Energiemenge, ein Energieverbrauch oder ein Ladezustand des Gerätes. Daneben ist auch eine Datenkommunikation und/oder ein Datenaustausch zu anderen Geräten und/oder einer übergeordneten Einheit (z.B. einer Daten-/Steuer- und Regelungseinheit) denkbar, wie beispielsweise zu weiteren Versorgungseinheiten, zentralen Dateneinheiten, Datenspeichern, Internet - Datenspeichern (Clouds) oder dergleichen.

Denkbar wäre auch eine kommunikative Verbindung zwischen der Energieversorgungsvorrichtung und mehreren Geräten, falls eine Energieversorgungsvorrichtung mehrere Geräte versorgen soll. Über diese kommunikative Verbindung ist bevorzugt auch eine Identifikation des Geräts und/oder der Energieversorgungseinrichtung möglich. Bevorzugt handelt es sich auch bei dieser kommunikativen Verbindung um eine drahtlose Verbindung. Bevorzugt stellt sich die Energieversorgungseinrichtung entsprechend der Daten und Parameter auf das zu versorgende Gerät ein, z.B. hinsichtlich einer zu übertragenden Energiedichte, eines Zeitraums der Energieübertragung und dergleichen.

Weiterhin ist es auch möglich, dass das Gerät mit Energiesende-Vorrichtung (etwa die Energieversorgungseinrichtung und/oder Energieempfangs-Vorrichtung (etwa das zu versorgende Gerät) die zur Energieübertragung relevanten Daten der Energiesende-Vorrichtung und/oder der Energieempfangs-Vorrichtung drahtlos an ein anderes oder mehrere andere Geräte (mit Energiesende-Vorrichtung und/oder Energieempfangs-Vorrichtung) und/oder an eine übergeordnete Einheit (z.B. Daten-/Steuer-und Regelungseinheit) und/ oder eine lokale Dateneinheit und/oder eine zentrale Dateneinheit und/oder per Internetanbindung an einen Zentralrechner und/oder einen Internetdatenspeicher/Cloudspeicher überträgt.

Daneben ist es auch bevorzugt dass die zur Energieübertragung relevanten Daten von einem oder von mehreren Geräten (mit Energiesende-Vorrichtung und/oder Energieempfangs-Vorrichtung) in einem anderen oder mehreren anderen Geräten (mit Energiesende-Vorrichtung und/oder Energieempfangs-Vorrichtung) und/oder in einer lokalen Daten- und/oder Steuereinheit und/oder in einer zentralen Daten- und/oder Steuereinheit und/oder in einem übergeordneten Zentralrechner und/oder in einer Internet-Daten- und/oder Steuereinheit gespeichert und/oder ausgewertet und/oder analysiert werden und/oder entsprechende (entsprechend den Parametern, den Daten, den festgelegten Algorithmen) Aktionen zur Energieübertragung veranlasst werden.

Daneben ist es auch bevorzugt dass Registrierungsdaten der Energieversorgungsvorrichtung und/oder des zu versorgenden Gerätes mit einer Energiesende-Vorrichtung und/oder Energieempfangs-Vorrichtung gespeichert werden.

z.B. Geräte-ID, Zugangsdaten und Zugriffsberechtigungen.

Weiterhin wäre es auch denkbar, dass Daten zur Personalisierung der Energieversorgungsvorrichtung und/oder des zu versorgenden Gerätes mit einer Energiesende-Vorrichtung und/oder Energieempfangs-Vorrichtung gespeichert werden.

z.B. Eigentümer, Nutzer, wirtschaftlich Berechtigter, Rechnungsempfänger, Rechnungssteller. Auch wäre es denkbar, dass die für die Energieübertragung spezifischen Parameter und Daten der Energieversorgungsvorrichtung und/oder des zu versorgenden Gerätes mit einer Energiesende-Vorrichtung und/oder Energieempfangs-Vorrichtung gespeichert werden. Diese Daten sind dabei bevorzugt aus einer Gruppe von Daten ausgewählt, welche Daten betreffend eine Strahlungsart, Daten betreffend minimale oder maximale Energiedichte, Daten betreffend eine Form des Energiebündels, Daten betreffend Energiestrahlparameter, Kombinationen und dergleichen enthält.

Bevorzugt werden energiebezogene wirtschaftliche Daten der Energieversorgungsvorrichtung und/oder des zu versorgenden Gerätes mit einer Energiesende-Vorrichtung und/oder Energieempfangs-Vorrichtung gespeichert. Bei diesen Daten kann es sich etwa um Daten betreffend einen Preis der gesendeten Energie, Daten betreffend einen maximal akzeptierten Preis der empfangenen Energie und dergleichen handeln. Daneben werden auch Betriebsdaten der Energieversorgungsvorrichtung und/oder des zu versorgenden Geräts aufgenommen, übertragen und/oder gespeichert werden wie etwa ein aktueller Verbrauch, ein Ladezustand und/oder eine Position. Gleiches gilt auch für Abrechnungsdaten des Geräts wie etwa eine übertragene oder empfangene Energiemenge. Bevorzugt weist die Vorrichtung auch eine Steuerungseinrichtung auf, welche die Energieübertragung steuert. Dabei ist es möglich dass der Energiestrahl der Energiesende-Vorrichtung aufgrund der energieübertragungsspezifischen Parameter der Energieempfangs-Vorrichtung gesteuert wird. Weiterhin ist es auch möglich und bevorzugt, dass sich die Energiesende-Vorrichtung auf die Möglichkeiten und Anforderungen der Energieempfangs-Vorrichtung so weit wie möglich und/oder nötig und/oder vorgegeben einstellt.

Wie oben ausgeführt, ist es bevorzugt, dass die Energieübertragung nach wirtschaftlichen und/oder energiespezifischen Kriterien wie Energiekosten, aktueller Wirkungsgrad der Energieübertragung, Energieverfügbarkeit, Energiebedarf, Ladezustand oder Prognosen dieser Kriterien erfolgt.

Daneben ist es auch denkbar und bevorzugt, dass die Energieübertragung autonom im Rahmen der vorgegeben Parameter und/oder der aktuellen Daten und der vorgegebenen Algorithmen erfolgt.

Wie oben erwähnt, weist die Vorrichtung auch eine Energiemesseinrichtung auf. Dabei wird die zur Energieübertragung aufgewendete elektrische Energie-Menge und/oder die gesendete Energiestrahlungs-Menge gemessen. Daneben wird mittels einer Energiemesseinrichtung auch die empfangene Energiestrahlungsmenge und/oder die zur Verfügung gestellte elektrische Energiemenge gemessen. Dabei sind bevorzugt auch die durch die Messeinheit ermittelten Werte für Abrechnungszwecke geeignet. Bei einer bevorzugten Ausführungsform ist das Gerät mit der Energiesende-Vorrichtung und/oder der Energieempfangs-Vorrichtung bzgl. Eigentümer und/oder Nutzer und/oder dem wirtschaftlich Berechtigten und/oder dem zur Abrechnung Berechtigten personalisiert.

Der Energieversorgungsvorrichtung ist eine Messeinrichtung zur Messung einer für die Energieübertragung benötigten Energie und/oder der ausgegebenen Energie und/oder der bei dem zu versorgenden Gerät ankommenden Energie und auch eines Energieverbrauchs zugeordnet. Auf diese Weise kann die benötigte und tatsächlich übertragene Energiemenge bestimmt werden. Eine derartige Messeinrichtung kann dabei beispielsweise in der Energieversorgungseinrichtung integriert sein. Auch kann durch das zu versorgende Gerät die dort ankommende Energie gemessen werden und bevorzugt auch an die Energieversorgungseinrichtung und/oder eine übergeordnete Steuereinheit kommuniziert werden.

Vorteilhaft hierbei ist, dass für jede Energieversorgungsvorrichtung und/oder für jedes zu ladende Gerät der individuelle Energieverbrauch und/oder die empfangene Energiemenge gemessen werden kann und dementsprechend auch eine individuelle Abrechnung des Verbrauchs für jeden Energieversorgungsvorrichtungseigentümer und/oder jeden Besitzer eines zu ladenden Geräts möglich ist. Vorteilhaft ist eine verbraucherbezogene Abrechnung auf Komponentenebene bzw. Geräte-Ebene und Energiekostenoptimierung durch zeitliche Steuerung und Versorgung beispielsweise bei Energieüberschuss und Billigstrom möglich.

Weiterhin können energieversorgungsspezifische Daten und Parameter der Energienetzwerkteilnehmer in einen Datenspeicher übertragen und gespeichert werden. Der Datentransfer zwischen den Energienetzwerkteilnehmern erfolgt bevorzugt drahtlos direkt mit anderen Energienetzwerkteilnehmern und/oder über eine lokale Zentraleinheit und/oder über ein Internet-Gateway und einen zentralen Web-Server bzw. einen zentralen Datenspeicher und/oder Cloud-Speicher.

Zur Speicherung bzw. zur Datenübertragung können Daten vorgesehen sein, die aus einer Gruppe von Daten ausgewählt sind, welche Registrierungsdaten der Energienetzwerkteilnehmer wie beispielsweise eindeutige ID (Geräte ID, Geräte - Eigentümer, Geräte - Nutzer), Eigentümer, Nutzer, wirtschaftlich Berechtigter, Abrechnungsdaten (wie Rechnungsempfänger und Rechnungsersteller) und Zugriffsberechtigungen enthalten.

Für die Energieübertragung spezifische Parameter können aus einer Gruppe von Parametern ausgewählt sein, welche die Art der möglichen Energiestrahlung, Energiestrahl-Parameter, Energiedichte sowie benötigte Energiemenge enthält;
Daneben können bevorzugt auch wirtschaftliche Parameter ausgewählt werden, welche insbesondere aus einer Gruppe von Parametern ausgewählt sind, welche den Preis der Strahlungsenergie der Energieversorgungseinheit sowie den maximal akzeptierten Preis der von der Empfangseinheit empfangenen Energie bzw. der bereitgestellten Energie enthält, wobei diese Parameter auch, unter anderem in Abhängigkeit vom aktuellen Verbrauch bzw. dem aktuellen Ladezustand gewählt sein können.

Daneben können auch Betriebsdaten ausgewählt werden, wie insbesondere aber nicht ausschließlich ein aktueller Verbrauch und aktuelle Position. Schließlich können auch Abrechnungsdaten wie die übertragene bzw. empfangene Energiemenge berücksichtigt werden.

Dabei ist es möglich, dass ein Benutzer diese Daten vorgibt und/oder wählt. Auch kann dem Benutzer, beispielsweise durch ein Menu die Auswahl dieser Parameter vorgeschlagen werden.

Bevorzugt stellt sich die Energieversorgungseinheit auf die Möglichkeiten und Anforderungen des zu versorgenden Gerätes so weit wie möglich ein. Die Parameter zur Energieübertragung werden bevorzugt zu den erreichbaren Energienetzwerkteilnehmern direkt und/oder zu einer lokalen Dateneinheit und/oder zu einer übergeordneten zentralen Datenbasis im Internet übertragen. Dabei ist es auch möglich, dass bei der Auswahl bestimmter Parameter eine Priorisierung vorgenommen wird bzw. ausgewählt wird, welche Parameter mit höherer Priorität eingehalten werden sollen. Weiterhin ist es auch denkbar, dass durch einen Benutzer bestimmte jedenfalls einzuhaltende Parameter vorgegeben werden und die Energieversorgungseinheit bzw. eine übergeordnete Steuereinheit weitere Parameter anpasst bzw. wählt.

Die Steuerung der Energieübertragung der Energieversorgungsvorrichtung zu dem zu versorgenden Gerät bzw. zu den zu versorgenden Geräten erfolgt bevorzugt aufgrund der Daten (z.B. Konfigurationsdaten, Stammdaten, Parameter, Betriebsdaten o.ä.) autonom und/oder über eine lokale Steuereinheit und/oder über eine übergeordnete Steuereinheit (App) im Internet und orientiert sich bevorzugt an den Anforderungen des zu versorgenden Gerätes.

Die Festlegung der zu übertragenden Energiemengen orientiert sich bevorzugt an Parametern der einzelnen Energienetzwerkteilnehmer und beinhaltet besonders bevorzugt technische Parameter und/oder wirtschaftliche Parameter und/oder sonstige Parameter. Somit kann ein Vergleich zwischen mehreren Energieversorgungseinrichtungen bzw. Sendern durchgeführt und ein Preis ausgehandelt werden.

Bevorzugt ist eine Vergleichseinrichtung vorgesehen, welche einen Vergleich unterschiedlicher Energieversorgungseinheiten durchführt. Dieser Vergleich kann dabei bevorzugt auf Basis der oben erwähnten Parameter durchgeführt werden. So kann die Vergleichseinrichtung etwa die Wirtschaftlichkeit der einzelnen Energieversorgungseinheiten vergleichen, und bevorzugt auch eine bestimmte Energieversorgungseinheit auswählen.

Die Teilnehmer des Energieversorgungsnetzwerks, die Versorgungseinheiten und die zu versorgenden Geräte bzw. aufladbaren Geräte, werden bevorzugt bezüglich Eigentümer und/oder Nutzer und/oder bzgl. des zur Abrechnung Berechtigten personalisiert. Wenigstens ein Teilnehmer, bevorzugt mehrere Teilnehmer und besonders bevorzugt jeder Teilnehmer des Energieversorgungsnetzwerkes beinhaltet bevorzugt eine eigene für Abrechnungszwecke geeignete und/oder zugelassene Messstelle. Die Abrechnung der übertragenen Energiemengen erfolgt besonders bevorzugt aufgrund der Messdaten gegenüber dem entsprechenden, jedem Teilnehmer zugeordneten, Eigentümer bzw. Nutzer bzw. sonstigen für die Abrechnung Berechtigten. Der Eigentümer bzw. Nutzer der jeweiligen Versorgungseinheit ist der Energieverkäufer und der Eigentümer bzw. Nutzer der jeweiligen zu versorgenden bzw. aufladbaren Geräte ist der Energiekäufer.

Bevorzugt weist die Vorrichtung eine insbesondere drahtlose Datenschnittstelle und/oder drahtlose Schnittstell zu einem Datennetzwerk auf. Bevorzugt ist auch eine zentrale Datenerfassungseinrichtung und/oder eine Datenanalyseeinrichtung vorgesehen, welche insbesondere dazu geeignet und bestimmt ist, relevante Daten für die Energieübertragung zu erfassen und/oder zu analysieren.

Die Energieversorgungsvorrichtung bzw. auch einzelne Energieversorgungseinrichtungen können auch selbst mit Energie versorgt werden und insbesondere auch selbst drahtlos mit Energie versorgt werden.

Erfindungsgemäß ist weiterhin ein Verfahren zum drahtlosen Versorgen von zumindest einem Gerät mittels einer Energieversorgungsvorrichtung vorgesehen, welches die folgenden Schritte aufweist:
- Verbinden der Energieversorgungsvorrichtung mit einem übergeordneten Energienetz bzw. einer übergeordneten Energieversorgungsvorrichtung
- Erfassen des zu versorgenden Geräts durch die Energieversorgungsvorrichtung mittels einer Positionserfassungseinrichtung
- Bevorzugt Identifizieren des zu versorgenden Geräts
- Ausrichten der Energieversorgungsvorrichtung bzw. des Energiestrahls auf das zu versorgende Gerät
- drahtlose Übertragung von Energie an das zu versorgende Gerät.

Bei einem bevorzugten Verfahren erfolgt eine Erfassung von für die Energieübertragung relevanten Daten und Parametern wie einer von einer Energieversorgungseinrichtung ausgegebenen Energie einer von dem zu versorgenden Gerät empfangenen bzw. aufgenommenen Energie, einem Wirkungsgrad und dergleichen. Daneben erfolgt bevorzugt auch eine Analyse dieser Daten bzw. Parameter. Bevorzugt wird die Energie unter Berücksichtigung dieser Daten bzw. Parameter übertragen.

Die Erfindung ist weiterhin auf ein mit Energie zu versorgendes Gerät gerichtet, zu dem von einer beabstandeten, wie weiter oben aufgezeigten, Energieversorgungsvorrichtung Energie übertragen werden kann. Auch die lokalen, die dezentralen, die zentralen und die internetbasierten bzw. cloudbasierten Datenerfassungs-/ Datenspeicher-/ Datenanalyse- / Steuer- und Regelungseinheiten sowie alle damit zusammenhängenden Verfahren, Abläufe und Algorithmen, die Datenkommunikation und alle Komponenten des Systemaufbaus sind mit dieser Anmeldung beansprucht. Ein beabstandetes mit Energie zu versorgendes Gerät kann dabei selbst auch eine Energieversorgungsvorrichtung beinhalten.

Vorteilhaft kann zu einem zu versorgenden Gerät (bzw. einer zu vorsorgenden Komponente) von einer Energieversorgungsvorrichtung drahtlos Energie übertragen werden. Das zu versorgende Gerät (bzw. die zu versorgende Komponente) beinhaltet vorzugsweise eine oder mehrere Energieempfangseinheiten, die die Energiestrahlung an der Oberfläche bzw. nahe der Oberfläche des Geräts sammelt und zu der Empfangseinheit und/oder zu mehreren Empfangseinheiten leitet. Bevorzugt kann das mit Energie zu versorgende Gerät (bzw. die zu versorgende Komponente) Energie von einer und/ oder mehreren Energieversorgungsvorrichtungen mit jeweils der gleichen Strahlungsart und/oder jeweils unterschiedlichen Strahlungsarten empfangen. Dabei kann bevorzugt eine Information im Energiestrahl ausgewertet werden und aufgrund dieser Information kann festgestellt werden, von welcher Energiesendevorrichtung die Energie übertragen wurde. Somit können mehrere Energieversorgungsvorrichtungen zu einem Gerät übertragen und die jeweilige übertragene Energiemenge kann messtechnisch erfasst und zugeordnet werden. Auch ist es bevorzugt möglich, dass eine Information im Energiestrahl ausgewertet werden kann und aufgrund der Information im Energiestrahl ein Datenaustausch mit dem Gerät bzw. der Geräteapplikation ermöglicht wird.

Darüber hinaus umfasst die Erfindung den Aufbau eines drahtlosen Energienetzwerks. Dies beinhaltet auch den Aufbau eines drahtlosen Energienetzwerks aus mehreren Versorgungseinheiten und mehreren zu versorgenden Geräten, den Aufbau eines hierarchischen unidirektionalen drahtlosen Energienetzwerks, eines hierarchischen bidirektionalen Energienetzwerks, eines teilvermaschten drahtlosen Energienetzwerks und eines vollvermaschten Energienetzwerks ebenso wie aller sich daraus ergebenen Mischformen. Gleiches betrifft den Aufbau anderer möglicher Netzwerkstrukturen, sowie die Einbindung von drahtlosen Energie-Repeatern (aktiv bzw. passiv, unidirektional bzw. bidirektional) zur Weiterleitung der Energiestrahlung und die Einbindung von drahtlosen Energie-Gateways (aktiv bzw. passiv, unidirektional bzw. bidirektional) zur Weiterleitung der Energie zu Geräten und/ oder Energienetzwerken mit einer anderen Art der drahtlosen Energieübertragung oder mit drahtgebundener Energieübertragung.

Bei einem Energienetzwerk mit mehreren Knoten und/oder Energienetzwerkteilnehmern bei einheitlichen Datenhandling/Steuerung/Regelung ist es vorteilhaft aus mehreren Energieversorgungsvorrichtungen und mehreren zu versorgenden Geräten ein drahtloses Energienetzwerk mit lokaler und/oder dezentraler und/oder zentraler und/oder internetbasierter bzw. cloudbasierter Stammdatenverwaltung, Konfigurationsdatenverwaltung, Parameterverwaltung, Datenerfassung, Datenspeicherung, Datenanalyse, Steuerung und Regelung der Energieübertragung aufzubauen.

Ein drahtloses Energienetzwerk kann auch hierarchisch mit unidirektionaler Energieübertragung aufgebaut sein. Hierbei beinhaltet ein zu versorgendes Gerät oder mehrere zu versorgende Geräte selbst eine Energieübertragungsvorrichtung zum Versorgen mindestens eines weiteren Gerätes. Bei einem hierarchisch aufgebauten bidirektionalen Energienetzwerk kann das versorgte Gerät auch Energie an die, dieses Gerät versorgende Energieversorgungseinheit, zurückübertragen.

Zur Verbesserung der Versorgungssicherheit der drahtlos mit Energie versorgten Geräte kann auch ein vermaschtes (teilvermaschtes bzw. vollvermaschtes) drahtloses Energienetzwerk oder Energie-Teilnetzwerk aufgebaut werden.

Bei einem teilvermaschten Energienetzwerk bzw. Energie-Teilnetzwerk können ein oder mehrere Energienetzwerkteilnehmer zu einem oder mehreren anderen Energienetzwerkteilnehmern jeweils unidirektional und/oder bidirektional drahtlos Energie übertragen.

Bei einem vollvermaschten Energienetzwerk bzw. Energie-Teilnetzwerk kann jeder Energienetzwerkteilnehmer zu jedem anderen Energienetzwerkteilnehmer drahtlos Energie übertragen.

Zur Realisierung eines Energienetzwerks können zusätzliche drahtlose Energienetzwerckomponenten mit spezifischer Funktionalität vorteilhaft sein. Hierbei kann es sich beispielsweise um Wireless-Energy-Network-Devices, Wireless-Energy-Repeater oder Wireless-Energy-Gateways handeln. Die zuvor genannten Komponenten können dabei passiv bzw. aktiv, unidirektional bzw. bidirektional ausgestaltet sein. Nachfolgend werden die zuvor genannten Komponenten kurz erläutert.

Ein Wireless-Energy-Network-Device (unidirektional bzw. bidirektional) ist dabei ein Gerät mit mindestens einer Energieempfangseinheit und mindestens einer Energiesendeeinheit, sowie einer bzw. mehreren anwendungsspezifischen Gerätefunktion (z.B. Sensorfunktion, Aktor-Funktion, Datenspeicherfunktion usw.).

Das Wireless-Energy-Network-Device (unidirektional) wird von einer anderen Energieversorgungseinheit bzw. einem anderen Wireless-Energienetzwerk-Teilnehmer drahtlos mit Energie versorgt. Die empfangene Energie kann von dem Gerät verbraucht und/oder gespeichert werden. Darüber hinaus kann das Gerät die empfangene und/oder gespeicherte Energie drahtlos zu einem weiteren Energienetzwerkteilnehmer übertragen.

Das Wireless-Energy-Network-Device (bidirektional) wird von einer anderen Energieversorgungseinheit oder einem anderen Wireless-Energienetzwerk-Teilnehmer drahtlos mit Energie versorgt. Die empfangene Energie wird von dem Gerät verbraucht und/oder gespeichert. Weiter kann das Gerät die empfangene und/oder gespeicherte Energie drahtlos zu einem weiteren Energienetzwerkteilnehmer übertragen. Es kann aber auch von dem versorgten Gerät wieder drahtlos Energie Empfangen und Energie an die Energieversorgungsein-heit zurückübertragen.

Ein passives Wireless-Energy-Network-Device (unidirektional bzw. bidirektional) beinhaltet keinen Speicher für elektrische Energie. Aus diesem Grund kann es somit nur so viel Energie verbrauchen bzw. an einen anderen Teilnehmer weiterleiten, wie aktuell von der Energieempfangseinheit empfangen wird.

Ein aktives Wireless-Energy-Network-Device (unidirektional bzw. bidirektional) beinhaltet einen Speicher für elektrische Energie. Somit kann das Gerät bei zeitweiser zu geringer empfangener Energie bzw. Leistung, bzw. bei höherem Energieverbrauch und/oder höherem eigenen Leistungs-bedarf bzw. höherem Energiebedarf und/oder Leistungsbedarf für die Versorgung eines weiteren Gerätes zusätzlich zur empfangenen Energie bzw. Leistung auch die gespeicherte Energie aus dem Speicher zur Deckung des benötigten Energiebedarfs bzw. Leistungsbedarfs verwenden.

Ein Wireless-Energy-Repeater richtet den empfangenen Energiestrahl lediglich neu auf einen oder mehrere zu versorgende Geräte aus bzw. passt den Energiestrahl an die Anforderungen des jeweiligen zu versorgenden Gerätes an.

Ein Wireless-Energy-Repeater (bidirektional) kann zusätzlich auch von einem zu versorgenden Gerät bei Bedarf Energie anfordern und wieder an die diesen Wireless-Energy-Repeater versorgende Energieversorgungseinheit zurückübertragen. Dabei richtet der Repeater den von dem zu versorgenden Gerät empfangenen Energiestrahl lediglich neu auf die versorgende Energieversorgungseinheit aus.

Ein Wireless-Energy-Repeater (passiv) richtet den empfangenen Energiestrahl lediglich neu auf einen oder mehrere zu versorgende Empfänger aus bzw. passt den Energiestrahl an die Anforderungen des jeweiligen zu versorgenden Empfängers an. Eine vorherige Umwandlung der empfangenen Energie in elektrische Energie findet nicht statt.

Ein Wireless-Energy-Repeater (aktiv) verfügt über die Funktionalität des Wireless-Energy-Repeater passiv, jedoch kann ein Teil der empfangenen Energie oder die gesamte empfangene Energie in elektrische Energie umgewandelt und zwischengespeichert werden. Darüber hinaus ist es möglich, die gespeicherte Energie bei Bedarf zur Erzielung höherer Leistungen bzw. Energiemengen oder bei zu geringer empfangener Energie bzw. Leistung zusätzlich zu dem ohne Umwandlung weitergeleiteten Energiestrahl mittels einer Energiesendeeinheit zusätzlich zu übertragen.

In das drahtlose Energienetzwerk mit gerichteter Strahlung können unter Verwendung von sog. Wireless-Energy-Gateways auch Energieversorgungseinheiten und/oder Geräte und/oder Energie-Speicher und/oder Energieverbraucher und/oder Energieübertragungssysteme und/oder Energienetzwerke mit abweichender Strahlungsart und/oder abweichender Energieübertragungs-art (z.B. drahtlose Energieübertragung mit ungerichteter, nicht gebündelter bzw. wenig ausgerichteter, wenig gebündelter Strahlung bzw. leitungsgebundene Energieübertragung) eingebunden werden.

Ein Wireless-Energy-Gateway dient als Energie-Schnittstelle zwischen zwei unterschiedlichen Energieübertragungssystemen bzw. Energieübertragungsarten (wie z.B. Energieübertragung durch gerichtete/gebündelte Energiestrahlen, Energieübertragung durch ungerichtete/nicht gebündelte bzw. wenig ausgerichtete/wenig gebündelte Strahlung, leitungsgebundene Energieübertragung), wobei die von einem Energieübertragungssystem empfangene bzw. aufgenommene Energie zunächst in elektrische Energie umgewandelt und dann die elektrische Energie in die Energieform des anderen Energieübertragungssystems umgewandelt wird. Die Energieübertragung zwischen den beiden unterschiedlichen Energieübertragungsarten kann dabei unidirektional oder bidirektional erfolgen.

Ein Wireless-Energy-Gateway in passiver Ausgestaltung beinhaltet keinen Energiespeicher und kann nur so viel Energie in die andere Art der Energieübertragung übertragen, wie von dem Wireless-Energy-Gateway empfangen wird.

Ein Wireless-Energy-Gateway in aktiver Ausgestaltung kann einen Teil der empfangenen Energie oder die gesamte empfangene Energie zwischenspeichern. Die zwischengespeicherte Energie kann bei Bedarf bzw. bei geringerer empfangener Energie bzw. bei Unterbrechung des Energieempfangs zur Erzielung höherer Leistungen oder höherer Energiemengen zusätzlich in das andere Energieübertragungssystem übertragen werden.

Damit der Energieempfänger, insbesondere bei Versorgung durch mehrere Energiesender gleichzeitig, feststellen kann von welchem Energiesender wieviel Energie empfangen wurde, kann mit der Energieübertragung auch gleichzeitig eine Information mit übertragen werden und/oder die Sender und Empfänger werden gezielt auf unterschiedliche Strahlungsarten und/oder unterschiedliche Strahlungsparameter eingestellt.

Ein Energieübertragungssystem kann mehrere drahtlose Energieübertragungsarten (z.B. gerichtete Energiestrahlungsarten, ungerichtete Strahlungsarten wie induktive Energieübertragung, Magnetresonanzverfahren u.a.) und/oder eine drahtgebundene Energieübertrag (z.B. Kupferkabel) in einer Energieversorgungseinheit und/oder einem zu versorgendem Gerät gleichzeitig beinhalten. Die Nutzung der unterschiedlichen Übertragungsart kann je nach technischer Möglichkeit und/oder aufgrund von voreingestellten und/oder dynamischen (technischen und/oder wirtschaftlichen und/oder sonstigen) Parametern der Teilnehmer erfolgen. Dabei kann auch die übertragbare Leistung je nach Übertragungsverfahren variieren. So können sich beispielsweise folgende Werte ergeben (welche insbesondere aber nicht ausschließlich von der Übertragungsart abhängig sind), drahtgebunden (max. 100W), bei geringem Abstand bis 5 cm induktiv (max. 15W), bei geringem Abstand bis 20cm mittels Magnetresonanzverfahren max. 5W, bei Abstand bis 2m und Sichtverbindung mit Licht (max. 0,5W, bei Abstand bis 5m und Sichtverbindung mit Laser (max. 0,1W) bei geringem Abstand bis 5m ohne Sichtverbindung mit Mikrowellen (max.0,05 W).

Aus Sicherheitsgründen ist es vorteilhaft, besonders bei hoher Strahlungsdichte, dass die Energieübertragungseinheit auch die Erkennung fremder Objekte und/oder lebender Objekte durch bekannte Verfahren beinhaltet.

Die Speicherung der für den Energieaustausch zwischen Energieversorgungseinheiten und Geräten notwendigen Daten (Stammdaten, Konfigurationsdaten, Betriebsdaten usw.) und die Datenanalyse und/oder die Steuerung und/oder Regelung des Energieaustausches zwischen den Energieversorgungseinheiten und den Geräten kann bevorzugt lokal bei der Energieversorgungseinheit und/oder dem zu versorgenden Gerät und/oder lokal in einer dezentralen Daten- Steuer- und Regelungseinheit und/oder in einer zentralen Daten- Steuer- und Regelungseinheit und/oder in einer internetbasierten/cloudbasierten Daten- Steuer- und Regelungseinheit erfolgen. Die Speicherung der Daten und/oder die Steuerung und Regelung des Energie-Austausches kann je nach Verfügbarkeit und/oder je nach eingestellten festen und/oder dynamischen Parametern lokal, dezentral, zentral bzw. internetbasiert in der Cloud erfolgen.

In das Energie-Abrechnungssystem für das drahtlose Energienetzwerk mit gerichteter Strahlung können über Energie-Gateways auch Geräte (elektronische Geräte und/oder elektronische Komponenten) von Energieübertragungssystemen und/oder Energienetzwerken mit abweichender Strahlungsart und/oder abweichender Energieübertragungsmethode (z.B. drahtlose Energieübertragung mit ungerichteter/nicht gebündelter bzw. wenig ausgerichteter/wenig gebündelter Strahlung, oder leitungsgebundener Energieübertragung eingebunden werden.

Bei drohender Unterversorgung kann bevorzugt das drahtlos zu versorgende Gerät autonom ein Notsignal senden und von einer Energieversorgungseinheit und/oder vom übergeordneten Steuer-und Regelsystem bevorzugte Energie-Versorgung anfordern und/oder auch einen Geräte-Nutzer und/oder eine sonstige Person und/oder ein sonstiges System informieren.

Falls das drahtlos zu versorgende Gerät wegen Energiemangel komplett ausfällt wird bevorzugt das drahtlos zu versorgende Gerät deaktiviert (z.B. Ruhemodus) und ausschließlich mittels Energy-Harvesting-Methoden zunächst so viel Energie in einem Energiespeicher zwischen-gespeichert, die für eine Positionsbestimmung und zur datentechnischen Übertragung zumindest der Position des Gerätes notwendig ist. Danach wird das Gerät in den aktiven Modus versetzt die Position bestimmt und die Position über die konfigurierte Datenschnittstelle und/oder eine sonstige Datenkommunikationsschnittstelle und/oder ein verfügbares Netzwerk zu wenigstens einer Energieversorgungseinheiten und/oder zu einem übergeordneten Daten-/Steuer- und Regelungssystem übertragen.

Bevorzugt weißt die Energieversorgungseinrichtung eine Energiesendeeinrichtung und/oder eine Ausrichteinrichtung auf, welche dazu in der Lage ist eine Ausrichtung des Energiestrahls mittels Zeitmultiplex dynamisch abwechselnd auf mehrere zu versorgende Geräte (3) bzw. Energieempfangseinheiten (3) gleichzeitig bzw. quasi gleichzeitig auszurichten und/oder die Energiesendeeinheit (25) dazu in der Lage ist den erzeugten Energiestrahl in mehrere Energiestrahlen aufzusplitten und die jeweiligen aufgesplitteten Energiestrahlen auf ein zu versorgendes Gerät (3) und/oder auf mehrere zu versorgende Geräte (3) auszurichten und/oder die Energiesendeeinheit (25) mehrere einzelne Energiesendeeinheiten (25) bzw. Strahlungseinheiten aufweist, welche gleiche und/oder unterschiedliche Strahlungsarten und/oder gleiche und/oder unterschiedliche Ausrichtungen der Strahlung entsenden und dadurch an mehrere zu versorgende Geräte (3) bzw. Energieempfangseinheiten (3) gleichzeitig und/oder quasi gleichzeitig Energie übertragbar ist, wobei mit dem jeweiligen Energiestrahl Energie und/oder gleichzeitig eine Information zur Identifikation einer Energieversorgungsvorrichtung (2) bzw. der Energiesendeeinheit (25) und/oder gleichzeitig eine Information zum Datenaustausch mit dem zu versorgenden Gerät (3) bzw. der Geräteapplikation übertragbar ist.

Weiter bevorzugt kann die Energiesendeeinheit den Energiestrahl bzgl. der Energiedichte und/oder der Strahlgeometrie und/oder der Strahlungsart und/oder sonstigen für die Energieübertragung relevante Parametern den Anforderungen des Energieempfängers und/oder den Vorgaben einer lokalen und/oder dezentralen und/oder zentralen und/oder internetbasierten bzw. cloudbasierten Steuerung bzw. Regelung anpassen. Die Energiedichte könnte dabei beispielsweise durch eine Steuerung/Regelung der Sendeleistung eingestellt werden. Unter der Strahlgeometrie wird beispielsweise der Querschnitt, die Dimension, die Fläche, die Form des Energiestrahls verstanden. Dies kann dabei beispielsweise durch mehrere gleichgerichtete Strahlungseinheiten, eine Lasermatrix beziehungsweise durch Abdecken oder möglicherweise durch eine Reflektion bestimmter Bereiche erzielt werden. Die Strahlungsart könnte beispielsweise dahingehend angepasst werden, dass mehrere Strahlungseinheiten mit unterschiedlicher Strahlungsart verwendet werden.

Die Erfindung ist weiterhin auf eine Schaltungsanordnung zum Aufbau eines Energie-Netzwerks mit drahtloser Energieübertragung, bestehend aus mehreren Energieversorgungseinheiten und mehreren zu versorgenden Geräten gerichtet. Ein Energie-Netzwerkteilnehmer ist dazu in der Lage Energie zu wenigstens einem anderen Energie-Netzwerkteilnehmern drahtlos zu übertragen und/oder ein Energie-Netzwerkteilnehmer von wenigstens einem Energie-Netzwerkteilnehmern drahtlos mit Energie versorgbar ist und/oder die Ortung eines oder mehrerer Energie-Netzwerkteilnehmers autonom erfolgt und/oder die Steuerung und Regelung der drahtlosen Energieübertragung zwischen den Netzwerkteilnehmern in lokalen und/oder dezentralen und/oder zentralen und/oder internetbasierten bzw. cloudbasierten Dateneinheiten und/oder Rechnereinheiten aufgrund der Stammdaten und/oder der Betriebsdaten und/oder aufgrund der Datenanalyse und/oder aufgrund von festen und/oder dynamischen Algorithmen und/oder sonstigen festen und/oder dynamischen technischen und/oder wirtschaftlichen Parametern autonom erfolgt, wobei das Netzwerk auch Energienetzwerkteilnehmer mit spezifischer Energieübertragungsfunktion, wie aktive bzw. passive unidirektionale bzw. bidirektionale Wireless-Energy-Repeater zur Weiterleitung von Energie zu einem anderen Energie-Netzwerkteilnehmer, aktive bzw. passive unidirektionale bzw. bidirektionale Wireless-Energy-Gateway zur Einbindung von Geräten und/oder Energienetzwerken mit einer anderen drahtlosen Energieübertragungsart und/oder zur Einbindung von Geräten und/oder Energienetzwerken mit drahtgebundener Energieübertragung beinhaltet.

Weiterhin ist die Erfindung auf eine Schaltungsanordnung zur drahtlosen Übertragung von Energie gerichtet, wobei eine Energieübertragungsvorrichtung und/oder ein drahtlos zu versorgendes Gerät ein für Abrechnungszwecke geeignetes Energie-Messsystem zur Messung der in der Energieübertragungseinheit aufgewendete und/oder gesendete Energie bzw. der vom zu versorgenden Gerät empfangene und/oder tatsächlich zur Verfügung gestellte Energie beinhaltet und die messtechnisch erfassten Energiemengen der jeweiligen Energieübertragungsvorrichtung und/oder dem jeweiligem zu versorgenden Gerät eindeutig zuordbar ist oder die aufgewendete und/oder übertragene und/oder empfangene und/oder zur Verfügung gestellte Energiemenge an ein übergeordnetes System zur Datenerfassung und/oder Datenanalyse mittels Datenkommunikation übertragbar ist welche über den in den Stammdaten hinterlegten Eigentümer bzw. Nutzer bzw. wirtschaftlich Berechtigten der Energieversorgungseinheit und/oder des zu versorgenden Gerätes personalisierbar sind und wobei die Daten für Abrechnungszwecke zur Verfügung gestellt werden.

Weitere Vorteile und Ausführungsformen ergeben sich aus den beigefügten Zeichnungen. Darin aufgeführte technische Merkmale werden auch isoliert von ihrer nur beispielhaft aufgeführten Merkmalskombination beansprucht. Technische Merkmale mit gleicher oder ähnlicher Wirkung werden mit demselben Bezugszeichen gekennzeichnet. Aus Gründen der Übersichtlichkeit wird von der Kennzeichnung von wiederholt abgebildeten technischen Merkmalen teilweise verzichtet.

Es zeigen:
Fig. 1 eine schematische Ansicht eines Energieversorgungssystems;
Fig. 2 eine schematische Ansicht einer Energieversorgungsvorrichtung;
Fig. 3 eine schematische Ansicht eines zu versorgenden Gerätes;
Fig. 4 einen schematischen Aufbau einer Datenkommunikation eines drahtlosen - Energie - Netzwerks;
Fig. 5 einen schematischen Aufbau einer Energieübertragung eines drahtlosen - Energie - Netzwerks.

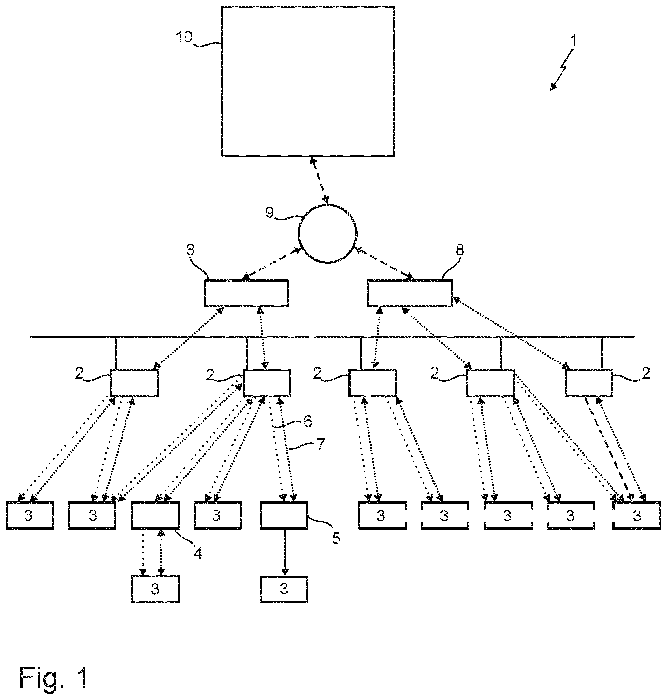

Figur 1 zeigt eine Gesamtstruktur eines Energieversorgungssystems 1. Dieses Energieversorgungssystem 1 umfasst dabei mehrere Energieversorgungsvorrichtungen 2, welche Energiestrahlung 6 an Geräte 3 bzw. Verbraucher übertragen können. Alternativ kann die Energiestrahlung 6 zunächst an eine Energieweiterleitung 4 oder einen Energiewandler 5 weitergeleitet werden, welche jeweils wiederum drahtlos oder aber auch drahtgebunden mit einem Gerät 3 verbunden sein können. Die Geräte 3, die Energieweiterleitung 4 und auch der Energiewandler 5 weisen eine wechselseitige kommunikative Verbindung 7 mit der jeweils dazugehörigen Energieversorgungsvorrichtung 2 auf. Die Energieversorgungsvorrichtungen 2 sind dabei drahtgebunden oder drahtlos mit einem übergeordneten Energie-Netz verbunden. Die hier dargestellten Energiewandler können aktiv oder passiv ausgestaltet sein. Der passive Energiewandler 5 richtet die empfangene Energiestrahlung neu aus ohne die empfangene Strahlungsenergie zu wandeln.

Der aktive Energiewandler empfängt und speichert die empfangene Energie und erzeugt bei Bedarf selbst gerichtete Strahlungsenergie um ein Gerät bzw. einen weiteren Energiewandler zu versorgen.

Weiterhin weisen die Energieversorgungsvorrichtungen 2 eine kommunikative Verbindung zu einem Web-Gateway 8 auf, über welches sie Zugang zum Internet 9 haben. Über diese Verbindung erhalten die Energieversorgungsvorrichtungen 2 Zugang zu einer Zentraleinheit 10 (z.B. Zentralrechner, zentrale Datenbank, Web-Server, Cloud, Cloud-Computing). In dieser Zentraleinheit 10 ist eine Datenbank sowie Applikationen hinterlegt. In der Datenbank sind Information über Benutzerdaten bzw. Registrierungsdaten, Konfigurationsdaten/Parameter, Betriebsdaten/Steuerdaten sowie Abrechnungsdaten hinterlegt. Somit werden über diese Zentraleinheit die Registrierung aller Energieknoten, die Konfiguration/Parametrierung, die Betriebsdatenerfassung und die Systemsteuerung sowie die Abrechnung vorgenommen.

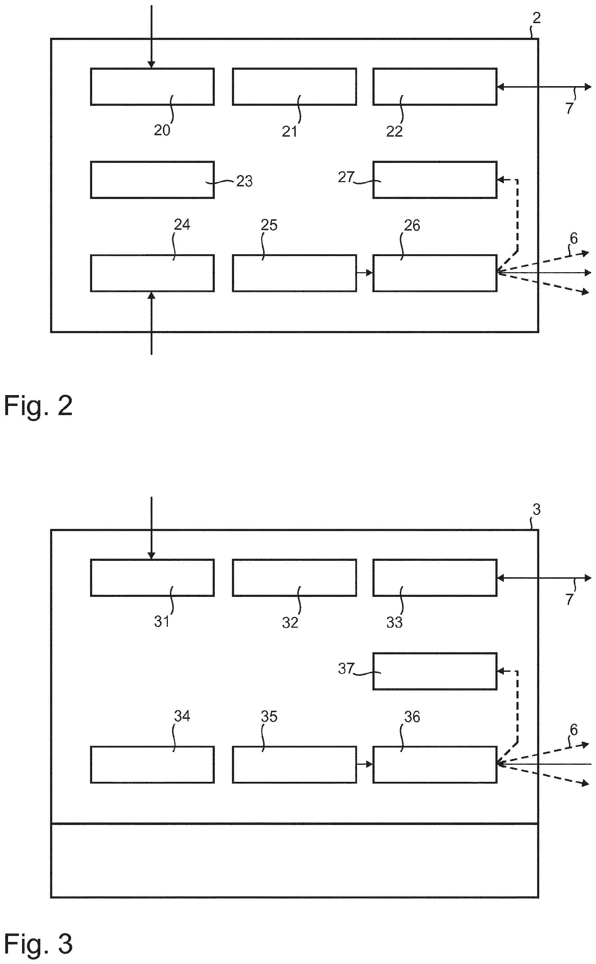

Figur 2 zeigt eine schematische Ansicht einer Energieversorgungsvorrichtung 2. Diese Energieversorgungsvorrichtung 2 umfasst dabei einen Energiewandler 20, eine Steuereinheit 21, eine Kommunikationseinrichtung 22 für drahtlose Kommunikation, einen Energiespeicher 23, eine Positionserfassungseinrichtung 24, eine Strahlungsenergie-Erzeugungseinrichtung bzw. eine Energiestrahl-Sendeeinrichtung 25, welche die Energiestrahlung 6 erzeugt, eine Ausrichteinrichtung 26 für die Energiestrahlung 6 und eine Messeinrichtung 27, welche die abgegebene Energiestrahlung misst.

In Figur 3 ist eine schematische Ansicht eines Gerätes 3 bzw. eines Verbrauchers gezeigt. Auch der Verbraucher umfasst eine Positionserfassungseinrichtung 31, eine Steuereinheit 32, eine Kommunikationseinrichtung 33 zur drahtlosen Kommunikation, einen Energiespeicher 34 sowie eine Energiestrahl-Sammeleinheit 36 (z.B. Konzentrator). Die Energiestrahl-Sammeleinheit 36 leitet die empfangene Strahlungsenergie zur Energiestrahl-Empfangseinrichtung 35, welche die empfangende Energiestrahlung 6 umwandelt. Weiterhin ist auch eine Messeinrichtung 37 vorgesehen, um die empfangene Energiestrahlung 6 zu messen.

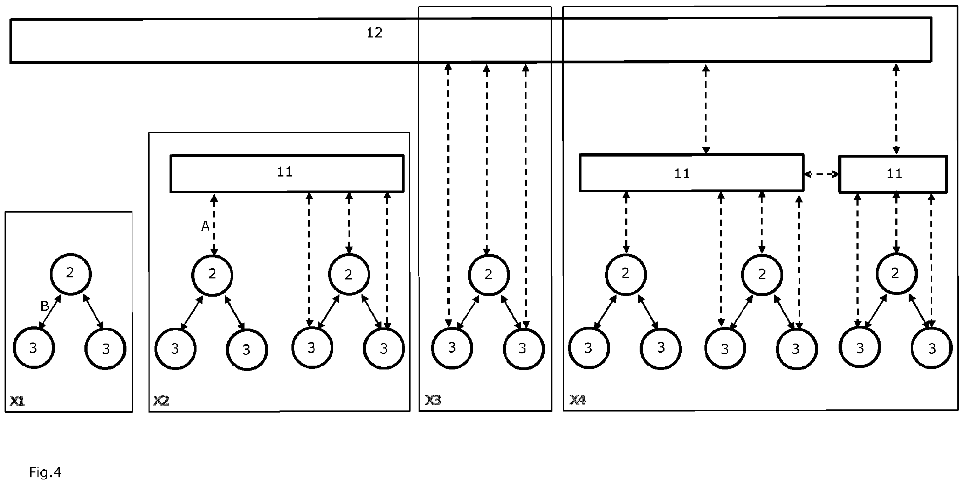

Figur 4 zeigt einen beispielhaften schematischen Aufbau einer Datenkommunikation eines drahtlosen - Energie - Netzwerks. Das Bezugszeichen X1 zeigt eine erste Variante, bei welchem die Datenerfassung, Steuerung und Regelung der Energieübertragung nur über eine Datenkommunikation zwischen Energieversorgungsvorrichtung 2 und zu versorgendem Gerät 3 erfolgt. Mittels des voll ausgefüllten Pfeils B wird die Datenkommunikation zwischen Energieversorgungseinheit 2 und dem zu versorgenden Gerät 3 dargestellt werden.

Der Bereich X2 zeigt eine zweite Variante. Hier wird eine Datenerfassung, Steuerung und Regelung der Energieübertragung mittels Datenkommunikation zwischen Energieversorgungseinheit 2 und zu versorgendem Gerät 3 und mittels Datenkommunikation mit lokaler Daten-/Steuer- und Regelungs-Einheit 11 dargestellt. Der gestrichelte Pfeil A symbolisiert hierbei eine Datenkommunikation mit einer übergeordneten Daten-/Steuer- und Regelungs-Einheit 11 für die Energieübertragung. Diese Datenkommunikation kann dabei lediglich zwischen der Energieversorgungseinheit 2 und der Daten-/Steuer- und Regelungs-Einheit 11 stattfinden oder auch zusätzlich noch mit dem zu versorgendem Gerät 3.

Der Bereich X3 zeigt eine dritte Variante. Hier ist wie in den Bereichen X1 und X2 die Kommunikation zwischen der Energieversorgungsvorrichtung 2 und dem zu versorgenden Gerät 3 gezeigt. Hierbei findet jedoch eine Kommunikation zwischen einer zentralen bzw. internetbasierten oder cloudbasierte Daten-/Steuer- und Regelungs-Einheit 12 und der Energieversorgungsvorrichtung 2 und dem zu versorgenden Gerät 3 statt.

Der Bereich X4 zeigt eine vierte Variante. Hierbei ist wieder die Kommunikation zwischen der Energieversorgungsvorrichtung 2 und dem zu versorgenden Gerät 3 gezeigt. Darüber hinaus ist auch wieder zu sehen, dass eine Datenkommunikation mit einer übergeordneten Daten-/Steuer- und Regelungs-Einheit sowohl zwischen einer lokalen Daten-/Steuer- und Regelungs-Einheit 11 und einer Energieversorgungsvorrichtung 2 als auch zwischen einer lokalen Daten-/Steuer- und Regelungs-Einheit 11 und einem zu versorgendem Gerät 3 stattfinden kann. Weiter wird hier dargestellt, dass mehrere lokale Daten-/Steuer- und Regelungs-Einheiten 11 auch untereinander kommunizieren können. Weiter wird hier dargestellt, dass eine Datenkommunikation zwischen einer lokalen Daten-/Steuer- und Regelungs-Einheit 11 und einer zentralen bzw. internetbasierten oder cloudbasierten Daten-/Steuer- und Regelungseinheit 12 stattfinden kann.

Wie in den Varianten X1, X2, X3 und X4 dargestellt, kann jeweils mehr als ein zu versorgendes Gerät 3 vorhanden sein.

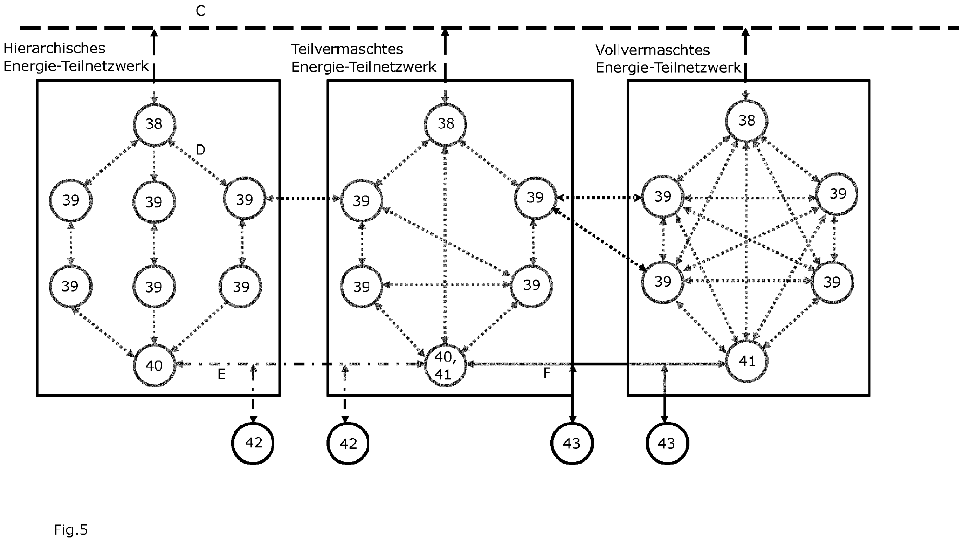

Figur 5 zeigt einen beispielhaften schematischen Aufbau einer Energieübertragung eines drahtlosen - Energie - Netzwerks. Hierbei werden ein hierarchisches Energie-Teilnetzwerk, ein teilvermaschtes Energie-Teilnetzwerk und ein vollvermaschtes Energie-Teilnetzwerk dargestellt.

Das hierarchische Energie-Teilnetzwerk besteht hierbei aus einem Energienetzwerk-Teilnehmer 38, dessen Energieübertragung mit drahtloser gebündelter und gerichteter Energiestrahlung erzeugt wird. Weiter sind in diesem Teilnetzwerk mehrere Energienetzwerk-Teilnehmer 39 vorhanden, welche über eine Energieübertragung mit drahtloser gebündelter und gerichteter Energiestrahlung verfügen. Darüber hinaus verfügt dieses Teilnetzwerk über einen Energienetzwerk-Teilnehmer 40, der eine Energieübertragung mit drahtloser gebündelter und gerichteter Energiestrahlung aufweist und über eine Gatewayfunktion zu Teilnehmern mit drahtloser z.B. induktiver Energieübertragung aufweist. Die einzelnen Teilnehmer 38, 39 und 40 können hier beispielsweise wie dargestellt mittels drahtloser Energieübertragung mittels gebündelter und gerichteter Energiestrahlung, unidirektional bzw. bidirektional (z.B. Licht) Energie übertragen und/oder kommunizieren. Diese Möglichkeit der Energieübertragung und/oder Kommunikation ist durch den Punkt-Pfeil D dargestellt. Der Energienetzwerk-Teilnehmer 40 kann darüber hinaus über eine drahtlose Energieübertragung mittels nicht gebündelter ungerichteter Energiestrahlung (z.B. induktive Energieübertragung) mit einem weiteren Energienetzwerk-Teilnehmer 40 eines benachbarten teilvermaschten Energie-Teilnetzwerk Energie übertragen und/oder kommunizieren. Dies ist durch den Strich-Punkt-Pfeil E dargestellt. In diese Kommunikation ist auch pro verbundenes Teilnetzwerk (in diesem Fall hierarchisch und teilvermascht) ein Energienetzwerk-Teilnehmer 42 eingebracht, welcher eine drahtlose z.B. induktive Energieübertragung aufweist.

Das dargestellte teilvermaschte Energie-Teilnetzwerk weißt wie das hierarchische Energie-Teilnetzwerk die Energienetzwerk-Teilnehmer 38, 39 und 40 auf, wobei der Energienetzwerk-Teilnehmer 40 zusätzlich noch als Energienetzwerk-Teilnehmer 41 mit einer drahtlosen gebündelten und gerichteten Energiestrahlung zur Energieübertragung und einer Gatewayfunktion zu Teilnehmern mit drahtgebundener Energieübertragung ausgebildet ist. Dieser Netzwerkteilnehmer 41 kann dabei mit einem weiteren Netzwerkteilnehmer 41 eines vollvermaschten Energie-Teilnetzwerks über eine drahtgebundene Energieübertragung F Energie übertragen und/oder kommunizieren. In diese Energieübertragung und/oder Kommunikation ist pro verbundenes Teilnetzwerk ein Energienetzwerk-Teilnehmer 43 mit drahtgebundener Energieübertragung eingebracht. Die Energieübertragung und/oder Kommunikation unter den einzelnen Energienetzwerk-Teilnehmern 38, 39, 40/41 kann hier wieder wie beispielsweise dargestellt ausgebildet sein. Man erkennt hier einen Unterschied zu dem hierarchischen Energie-Teilnetzwerk, da die einzelnen Energieübertragungen und/oder Kommunikationen nicht mehr "linear" sondern beispielsweise auch "überkreuzt" auftreten und somit verschiedene Energienetzwerk-Teilnehmer miteinander Energie übertragen und/oder kommunizieren können.

Das vollvermaschte Energie-Teilnetzwerk weißt mit Ausnahme des Energienetzwerk-Teilnehmers 40 die gleichen Energienetzwerk-Teilnehmer (38, 39, 41) auf wie das teilvermaschte Energie-Teilnetzwerk. Der Unterschied zum teilvermaschten Energie-Teilnetzwerk liegt hierbei darin, dass sämtliche Energienetzwerk-Teilnehmer miteinander Energie übertragen und/oder kommunizieren können.

Alle drei Teilnetzwerke (hierarchisch, teilvermascht und vollvermascht) verfügen, wie zuvor bereits aufgezeigt, über den Energienetzwerk-Teilnehmer 38 über welchen ein Energieaustausch mit einer übergeordneten Energieversorgung C auf, das dabei als drahtgebundenes Leitungsnetz oder als drahtloses Energieübertragungssystem ausgeführt werden kann.

Die einzelnen Energienetzwerk-Teilnehmer 38, 39, 40, 41, 42 und 43 können dabei mit oder ohne Energiespeicher ausgebildet sein.

Aus Gründen der Übersichtlichkeit wurden in den Zeichnungen teilweise die Bezugszeichen direkt jeweils in bzw. an das Merkmal angefügt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Energieversorgungssystem
- 2: Energieversorgungsvorrichtung
- 3: Gerät! zu versorgendes Gerät
- 4: Energieweiterleitung
- 5: Energiewandler
- 6: Energiestrahlung
- 7: kommunikative Verbindung
- 8: Web-Gateway
- 9: Internet
- 10: Zentraleinheit
- 11: lokale Daten-/Steuer- und Regelungs-Einheit
- 12: zentrale bzw. internetbasierte oder cloudbasierte Daten-/Steuer- und Regelungs-Einheit
- 20: Energiewandler
- 21: Steuereinheit
- 22: Kommunikationseinrichtung
- 23: Energiespeicher
- 24: Positionserfassungseinrichtung
- 25: Strahlungsenergie-Erzeugungseinrichtung/ Energiestrahl-Sendeeinrichtung
- 26: Ausrichteinrichtung der Energiestrahlung
- 27: Messeinrichtung für Energiestrahlung
- 31: Positionserfassungseinrichtung
- 32: Steuereinheit
- 33: Kommunikationseinrichtung
- 34: Energiespeicher
- 35: Energiestrahl-Empfangseinrichtung/ Strahlungsenergie-Wandler
- 36: Energiestrahlsammeleinheit
- 37: Messeinrichtung für Energiestrahlung
- 38: Energienetzwerk-Teilnehmer
- 39: Energienetzwerk-Teilnehmer
- 40: Energienetzwerk-Teilnehmer
- 41: Energienetzwerk-Teilnehmer
- 42: Energienetzwerk-Teilnehmer
- 43: Energienetzwerk-Teilnehmer
- A: Datenkommunikation mit übergeordneter Daten-/Steuer- und Regelungs-Einheit für die Energieübertragung
- B: Datenkommunikation zwischen Energieversorgungseinheit und zu versorgen dem Gerät
- C: Energieaustausch mit übergeordneter Energieversorgung
- D: Drahtlose Energieübertragung mittels gebündelter und gerichteter Energiestrahlung
- E: Drahtlose Energieübertragung mittels nicht gebündelter ungerichteter Energiestrahlung
- F: Drahtgebundene Energieübertragung
- X1: erste Variante
- X2: zweite Variante
- X3: dritte Variante
- X4: vierte Variante

## Patentansprüche

1. Energieversorgungsvorrichtung (2) zum Versorgen zumindest eines von dieser Energieversorgung (2) beabstandeten Geräts (3) mit elektrischer Energie, wobei die Energieversorgungsvorrichtung (2) an einem Energienetz anschließbar und/oder von einer anderen Energieversorgungsvorrichtung drahtlos mit Energie versorgt wird, umfassend zumindest eine Positionserfassungseinrichtung (24) zum Erfassen einer geometrischen oder räumlichen Position des zumindest einen Gerätes (3) und einer Ausrichteinrichtung zum Ausrichten eines Energiestrahls der Energieversorgungsvorrichtung (2)
wobei die Energieversorgungsvorrichtung (2) und/oder die Energiestrahlung (6) auf das zumindest eine Gerät (3) ausrichtbar ist derart, dass Energie von der Energieversorgungsvorrichtung (2) drahtlos an das Gerät übertragbar ist und/oder das Gerät mittels der Energieversorgungseinrichtung (2) mit elektrischer Energie versorgbar ist,
**dadurch gekennzeichnet, dass**
der Energieversorgungsvorrichtung (2) eine Messeinrichtung (27) zur Messung einer übertragenen Energie und/oder einer bei einem zu versorgenden Gerät ankommenden Energie und/oder eines Energieverbrauchs zugeordnet ist und für jede Energieversorgungsvorrichtung (2) und/oder für jedes zu ladende Gerät (3) der individuelle Energieverbrauch und/oder die empfangene Energiemenge gemessen werden kann.

2. Energieversorgungsvorrichtung (2) nach Anspruch 1,
**dadurch gekennzeichnet, dass**
die Energieversorgungsvorrichtung (2) und/oder das Gerät (3) mobil oder ortsfest angeordnet ist.

3. Energieversorgungsvorrichtung (2) nach Anspruch 1,
**dadurch gekennzeichnet, dass**
die Positionserfassungseinrichtung (24, 31) aus einer Gruppe von Positionserfassungseinrichtungen ausgewählt ist, welche eine oder mehrere Kameras, Beacon-Technologien, einen GPS-Sensor, GSM-Ortung, WLAN-Ortung, Bluetooth-Ortung, einen Kompass, Gyrometer, Höhenmesser, einen Lagesensor, einen Neigungssensor und/oder einen Beschleunigungssensor, eine Positionsscaneinrichtung und/oder Kombinationen aus diesen Einrichtungen umfasst.

4. Energieversorgungsvorrichtung (2) nach Anspruch 1,
**dadurch gekennzeichnet, dass**
die Position des beabstandeten Gerätes (3) und/oder mehrerer Geräte autonom erfassbar ist.

5. Energieversorgungsvorrichtung (2) nach Anspruch 1,
**dadurch gekennzeichnet, dass**
die Energie mittels gerichteter Energiestrahlung (6) und/oder Energiebündel übertragbar ist.

6. Energieversorgungsvorrichtung (2) nach Anspruch 5,
**dadurch gekennzeichnet, dass**
die Energiestrahlung (6) aus einer Gruppe von Energieträgern ausgewählt ist, welche Licht im sichtbaren Wellenlängenbereich, Licht im unsichtbaren Wellenlängenbereich, Laser, Mikrowellen, Funkstrahlung, Röntgenstrahlung, Radarstrahlung, induktive Strahlung, Ultraschall, kapazitive Strahlung oder Maser umfasst.

7. Energieversorgungsvorrichtung nach Anspruch 1,
**dadurch gekennzeichnet, dass**
das wenigstens eine zu versorgende Gerät (3) und/ oder die Energieversorgungsvorrichtung (2) eine kommunikative Verbindung (7) zu der Energieversorgungsvorrichtung und/oder einer lokalen Dateneinheit bzw. Steuereinheit und/oder einer zentralen bzw. internetbasierten Dateneinheit bzw. Steuereinheit aufweist und/oder herstellen kann.

8. Energieversorgungsvorrichtung (2) nach Anspruch 7,
**dadurch gekennzeichnet, dass**
über die kommunikative Verbindung (7) Daten übertragbar sind, welche für eine Energieversorgung des Geräts (3) und/oder eine Energieübertragung charakteristisch sind, wie eine aber nicht ausschließlich Position des Gerätes, ein Wirkungsgrad, eine maximale Leistung, eine benötigte Energiemenge, ein Energieverbrauch oder ein Ladezustand des Gerätes an die Energieversorgungsvorrichtung übertragbar sind.

9. Energieversorgungsvorrichtung (2) nach Anspruch 1,
**dadurch gekennzeichnet, dass**
eine Energiesendeeinrichtung dazu in der Lage ist eine Ausrichtung des Energiestrahls mittels Zeitmultiplex dynamisch abwechselnd auf mehrere zu versorgende Geräte (3) bzw. Energieempfangseinheiten (3) gleichzeitig bzw. quasi gleichzeitig auszurichten und/oder die Energiesendeeinheit (25) dazu in der Lage ist den erzeugten Energiestrahl in mehrere Energiestrahlen aufzusplitten und die jeweiligen aufgesplitteten Energiestrahlen auf ein zu versorgendes Gerät (3) und/oder auf mehrere zu versorgende Geräte (3) auszurichten und/oder die Energiesendeeinheit (25) mehrere einzelne Energiesendeeinheiten (25) bzw. Strahlungseinheiten aufweist, welche gleiche und/oder unterschiedliche Strahlungsarten und/oder gleiche und/oder unterschiedliche Ausrichtungen der Strahlung entsenden und dadurch an mehrere zu versorgende Geräte (3) bzw. Energieempfangseinheiten (3) gleichzeitig und/oder quasi gleichzeitig Energie übertragbar ist, wobei mit dem jeweiligen Energiestrahl Energie und/oder gleichzeitig eine Information zur Identifikation einer Energieübertragungsvorrichtung bzw. der Energiesendeeinheit (25) und/oder gleichzeitig eine Information zum Datenaustausch mit dem zu versorgenden Gerät (3) bzw. der Geräteapplikation übertragbar ist.

10. Energieversorgungsvorrichtung (2) nach Anspruchs 1 oder 10,
**dadurch gekennzeichnet, dass**
eine Energiesendeeinheit (25) dazu in der Lage ist einen Energiestrahl bezüglich einer Eigenschaft an die Anforderungen eines Energieempfängers (35) und/oder den Vorgaben einer lokalen und/oder dezentralen und/oder zentralen und/oder internetbasierten bzw. cloudbasierten Steuerung bzw. Regelung anzupassen, wobei diese Eigenschaft aus einer Gruppe von Eigenschaften ausgewählt ist welche, die Energiedichte, die Strahlgeometrie, die Strahlungsart oder sonstige für die Energieübertragung relevanten Parametern ausgewählt ist.

11. Ein mit Energie zu versorgendes Gerät (3) zu dem von einer Energieversorgungsvorrichtung (2) gemäß Anspruch 1 drahtlos Energie übertragbar ist,
wobei das zu versorgende Gerät (3) eine oder mehrere Energieempfangseinheiten (35) aufweist und/oder dazu in der Lage ist die Energiestrahlung (6) an der Oberfläche bzw. nahe der Oberfläche zu sammeln und zu der Empfangseinheit (35) und/ oder zu mehreren Empfangseinheiten (35) zu leiten, wobei das mit Energie zu versorgende Gerät (3) von wenigstens einer Energieversorgungsvorrichtungen (2) mit jeweils der gleichen Strahlungsart und/oder jeweils unterschiedlichen Strahlungsarten Energie beaufschlagbar ist und/oder über eine Information im Energiestrahl feststellbar ist von welcher Energiesendeeinheit (25) die Energie übertragen wurde und somit mehrere Energieversorgungsvorrichtungen zu einem Gerät Energie übertragen können und für jedes zu ladende Gerät (3) der individuelle Energieverbrauch und/oder die empfangene Energiemenge gemessen werden kann und zuordbar ist und/oder eine Information im Energiestrahl auswertbar ist und aufgrund der Information im Energiestrahl ein Datenaustausch mit dem Gerät bzw. der Geräteapplikation ermöglicht wird.

12. Verfahren zum drahtlosen Versorgen von zumindest einem Gerät (3) mittels einer Energieversorgungsvorrichtung (2) nach Anspruch 1 mit den folgenden Schritte:
- Verbinden der Energieversorgungsvorrichtung (2) mit einem übergeordneten Energienetz bzw. einer übergeordneten Energieversorgungsvorrichtung;
- Erfassen des zu versorgenden Geräts (3) durch die Energieversorgungsvorrichtung (2) mittels zumindest einer Positionserfassungseinrichtung (24, 31);
- Identifizieren des zu versorgenden Geräts (3);
- Ausrichten der Energieversorgungsvorrichtung (2) bzw. des Energiestrahles auf das zu versorgende Gerät (3);
- drahtlose Übertragung von Energie an das zu versorgende Gerät (3).

## Claims

1. Energy supply apparatus (2) for supplying electrical energy to at least one device (3) spaced apart from this energy supply (2), wherein the energy supply apparatus (2) can be connected to an energy network and/or is supplied wirelessly with energy by another energy supply apparatus, comprising at least one position detection device (24) for detecting a geometric or spatial position of the at least one device (3) and an orienting device for orientation of an energy beam of the energy supply apparatus (2),
wherein the energy supply apparatus (2) and/or the energy radiation (6) can be oriented with respect to the at least one device (3) in such a way that energy can be transmitted by the energy supply apparatus (2) wirelessly to the device and/or the device can be supplied with electrical energy by the energy supply apparatus (2),
**characterised in that**
the energy supply apparatus (2) is assigned with a measuring unit (27) for measuring a transmitted energy and/or an incoming energy at a device to be supplied and/or an energy consumption and for each energy supply apparatus (2) and/or for each device (3) to be charged the individual energy consumption and/or the received amount of energy can be measured.

2. Energy supply apparatus (2) according to claim 1,
**characterised in that**
the energy supply apparatus (2) and/or the device (3) is arranged in a mobile or stationary manner.

3. Energy supply apparatus (2) according to claim 1,
**characterised in that**
the position detection device (24, 31) is selected from a group of position detection devices which comprises one or more cameras, beacon technologies, a GPS sensor, GSM location, WLAN location, Bluetooth location, a compass, gyrometer, altimeter, a position sensor, an inclination sensor and/or an acceleration sensor, a position scan device and/or combinations of these devices.

4. Energy supply apparatus (2) according to claim 1,
**characterised in that**
the position of the spaced-apart device (3) and/or of several devices can be detected autonomously.

5. Energy supply apparatus (2) according to claim 1,
**characterised in that**
the energy can be transmitted by directional energy radiation (6) and/or energy bundle.

6. Energy supply apparatus (2) according to claim 5,
**characterised in that**
the energy radiation (6) is selected from a group of energy sources which comprises light in the visible wavelength range, light in the non-visible wavelength range, lasers, microwaves, radio radiation, X-ray radiation, radar radiation, inductive radiation, ultrasound, capacitive radiation or masers.

7. Energy supply apparatus according to claim 1,
**characterised in that**
the at least one device (3) to be supplied and/or the energy supply apparatus (2) has and/or can produce a communicative connection (7) to the energy supply apparatus and/or a local data unit or control unit and/or a central or internet-based data unit or control unit.

8. Energy supply apparatus (2) according to claim 7,
**characterised in that**
by the communicative connection (7) data can be transmitted to the energy supply apparatus, these data being characteristic for an energy supply to the device (3) and/or an energy transmission, such as but not exclusively a position of the device, a degree of effectiveness, a maximum power, a required amount of energy, an energy consumption or a state of charge of the device.

9. Energy supply apparatus (2) according to claim 1,
**characterised in that**
an energy transmission unit is capable of orienting the energy beam by time-division multiplexing dynamically alternating on several devices (3) to be supplied or energy receiving units (3) simultaneously or quasi-simultaneously and/or the energy transmission unit (25) is capable of splitting up the generated energy beam into several energy beams and orienting the respective split-up energy beams relative to a device (3) to be supplied and/or to several devices (3) to be supplied and/or the energy transmission unit (25) has several individual energy transmission units (25) or radiation units which emit the same and/or different types of radiation and/or the same and/or different orientations of the radiation, and as a result energy can be transmitted simultaneously and/or quasi-simultaneously to several devices (3) to be supplied or energy receiving units (3), wherein, with the respective energy beam, energy and/or simultaneously information for identification of an energy transmission apparatus or the energy transmission unit (25) and/or simultaneously information for data exchange with the device (3) to be supplied or the device application can be transmitted.

10. Energy supply apparatus (2) according to claim 1 or 10,
**characterised in that**
an energy transmitting unit (25) is capable of adapting an energy beam, with regard to a property, to the requirements of an energy receiver (35) and/or the specifications of a local and/or decentralised and/or central and/or internet-based or cloud-based control or regulation, wherein this property is selected from a group of properties which comprises the energy density, the beam geometry, the type of radiation or other parameters relevant for the energy transmission.

11. A device (3) to be supplied with energy to which energy can be transmitted wirelessly by an energy supply apparatus (2) according to claim 1,
wherein
the device (3) to be supplied has one or more energy receiving units (35) and/or is capable of collecting the energy radiation (6) at the surface or close to the surface and guiding it to the receiving unit (35) and/or to several receiving units (35), wherein the device (3) to be supplied with energy is supplied by at least one energy supply apparatus (2) with energy in each case of the same type of radiation and/or in each case different types of radiation and/or by information in the energy beam it is possible to ascertain which energy transmitting unit (25) has transmitted the energy and thus several energy supply apparatus can transmit energy to a device and for each device (2) to be charged the individual energy consumption and/or the transmitted amount of energy can be measured and assigned and/or information in the energy beam can be evaluated and on the basis of the information in the energy beam a data exchange with the device or the device application is made possible.

12. Method for wireless supply of at least one device (3) by an energy supply apparatus (2) according to claim 1 with the following steps:
- connecting the energy supply apparatus (2) to a higher-level energy network or a higher-level energy supply apparatus;
- detecting the device (3) to be supplied by the energy supply apparatus (2) by at least one position detection device (24, 31);
- identifying the device (3) to be supplied;
- orienting the energy supply apparatus (2) or the energy beam relative to the device (3) to be supplied;
- wireless transmission of energy to the device (3) to be supplied.

## Revendications

1. Dispositif d'alimentation en énergie (2) destiné à alimenter en énergie électrique au moins un appareil (3) tenu à distance de ladite alimentation en énergie (2), dans lequel le dispositif d'alimentation en énergie (2) peut être raccordé à un réseau d'énergie et/ou est alimenté sans fil en énergie par un autre dispositif d'alimentation en énergie, comprenant au moins un système de détection de position (24) destiné à détecter une position géométrique ou spatiale de l'au moins un appareil (3) et un système d'orientation destiné à orienter un faisceau d'énergie du dispositif d'alimentation en énergie (2),
dans lequel le dispositif d'alimentation en énergie (2) et/ou le rayonnement d'énergie (6) peuvent être orientés sur l'au moins un appareil (3) de telle manière que de l'énergie peut être transmise sans fil à l'appareil par le dispositif d'alimentation en énergie (2) et/ou l'appareil peut être alimenté en énergie électrique au moyen du dispositif d'alimentation en énergie (2),
**caractérisé en ce que**
un système de mesure (27) destiné à mesurer une énergie transmise et/ou une énergie arrivant pour un appareil à alimenter et/ou une consommation d'énergie est associé au dispositif d'alimentation en énergie (2) et la consommation d'énergie individuelle et/ou la quantité d'énergie reçue peuvent être mesurées pour chaque dispositif d'alimentation en énergie (2) et/ou pour chaque appareil à charger (3).

2. Dispositif d'alimentation en énergie (2) selon la revendication 1, **caractérisé en ce que**
le dispositif d'alimentation en énergie (2) et/ou l'appareil (3) sont disposés de manière mobile ou stationnaire.

3. Dispositif d'alimentation en énergie (2) selon la revendication 1, **caractérisé en ce que**
le système de détection de position (24, 31) est choisi parmi un groupe de systèmes de détection de position, lequel comprend une ou plusieurs caméras, des technologies beacon, un capteur GPS, une localisation GSM, une localisation WLAN, une localisation Bluetooth, une boussole, un gyromètre, un système de mesure de hauteur, un capteur de position, un capteur d'inclinaison et/ou un capteur d'accélération, un système de balayage de position et/ou des combinaisons desdits systèmes.

4. Dispositif d'alimentation en énergie (2) selon la revendication 1, **caractérisé en ce que**
la position de l'appareil (3) tenu à distance et/ou de plusieurs appareils peut être détectée de manière autonome.

5. Dispositif d'alimentation en énergie (2) selon la revendication 1, **caractérisé en ce que**
l'énergie peut être transmise au moyen d'un rayonnement d'énergie (6) dirigé et/ou d'un paquet d'énergie.

6. Dispositif d'alimentation en énergie (2) selon la revendication 5, **caractérisé en ce que**
le rayonnement d'énergie (6) est choisi parmi un groupe de vecteurs d'énergie, lequel comprend de la lumière dans le domaine des longueurs d'onde visible, de la lumière dans le domaine des longueurs d'onde non visible, des lasers, des micro-ondes, un rayonnement d'ondes radio, des rayons X, un rayonnement radar, un rayonnement par induction, des ondes ultrasonores, un rayonnement capacitif ou un maser.

7. Dispositif d'alimentation en énergie selon la revendication 1, **caractérisé en ce que**
l'au moins un appareil (3) à alimenter et/ou le dispositif d'alimentation en énergie (2) présente et/ou peut établir une liaison de communication (7) avec le dispositif d'alimentation en énergie et/ou avec une unité de données ou une unité de commande locale et/ou une unité de données ou une unité de commande centrale ou basée sur Internet.

8. Dispositif d'alimentation en énergie (2) selon la revendication 7, **caractérisé en ce que**
peuvent être transmises par l'intermédiaire de la liaison de communication (7) des données, lesquelles sont propres à une alimentation en énergie de l'appareil (3) et/ou à une transmission d'énergie, comme mais pas exclusivement une position de l'appareil, un rendement, une puissance maximale, une quantité d'énergie requise, une consommation d'énergie ou un état de charge de l'appareil, peuvent être transmises au dispositif d'alimentation en énergie.

9. Dispositif d'alimentation en énergie (2) selon la revendication 1, **caractérisé en ce que**
un système d'envoi d'énergie est en mesure d'orienter de manière simultanée ou de manière quasi simultanée une orientation du rayon d'énergie au moyen d'un multiplexage temporel de manière dynamique en alternance sur plusieurs appareils (3) à alimenter ou unités de réception d'énergie (3) et/ou l'unité d'envoi d'énergie (25) est en mesure de séparer le rayon d'énergie produit en plusieurs rayons d'énergie et d'orienter les rayons d'énergie séparés respectifs sur un appareil (3) à alimenter et/ou sur plusieurs appareils (3) à alimenter et/ou l'unité d'envoi d'énergie (25) présente plusieurs unités d'envoi d'énergie (25) ou unités de rayonnement individuelles, lesquelles envoient des types de rayonnement identiques et/ou différents et/ou des orientations du rayonnement identiques et/ou différentes et ainsi de l'énergie peut être transmise de manière simultanée et/ou de manière quasi simultanée à plusieurs appareils (3) à alimenter ou unités de réception d'énergie (3), dans lequel de l'énergie et/ou simultanément une information sur l'identification d'un dispositif de transmission d'énergie ou de l'unité d'envoi d'énergie (25) et/ou de manière simultanée une information sur l'échange de données avec l'appareil (3) à alimenter ou l'application d'appareil peuvent être transmises avec le rayon d'énergie respectif.

10. Dispositif d'alimentation en énergie (2) selon la revendication 1 ou 10, **caractérisé en ce que**
l'unité d'envoi d'énergie (25) est en mesure d'adapter un rayon d'énergie concernant une propriété aux exigences d'un récepteur d'énergie (35) et/ou aux prescriptions d'une commande ou régulation locale et/ou décentralisée et/ou centrale et/ou basée sur Internet ou basée sur le nuage, dans lequel ladite propriété est choisie parmi un groupe de propriétés, qui comprend la densité d'énergie, la géométrie de rayon, le type de rayonnement ou d'autres paramètres importants pour la transmission d'énergie.

11. Appareil (3) à alimenter en énergie, auquel de l'énergie peut être transmise sans fil par un dispositif d'alimentation en énergie (2) selon la revendication 1,
dans lequel
l'appareil (3) à alimenter présente une ou plusieurs unités de réception d'énergie (35) et/ou est en mesure de collecter le rayonnement d'énergie (6) sur la surface ou à proximité de la surface et le diriger vers l'unité de réception (35) et/ou vers plusieurs unités de réception (35), dans lequel l'appareil (3) à alimenter en énergie peut être soumis à l'action du type de rayonnement identique et/ou de différents types de rayonnement respectivement par au moins un dispositif d'alimentation en énergie (2) et/ou il est possible de constater par l'intermédiaire d'une information dans le rayon d'énergie l'unité d'envoi d'énergie (25) depuis laquelle l'énergie a été transmise et ainsi plusieurs dispositifs d'alimentation en énergie peuvent transmettre de l'énergie à un appareil et la consommation d'énergie individuelle et/ou la quantité d'énergie reçue peuvent être mesurées pour chaque appareil (3) à charger et peuvent être associées et/ou une information dans le rayon d'énergie peut être évaluée et un échange de données avec l'appareil ou l'application d'appareil est rendu possible en raison de l'information dans le rayon d'énergie.

12. Procédé d'alimentation sans fil d'au moins un appareil (3) au moyen d'un dispositif d'alimentation en énergie (2) selon la revendication 1, avec les étapes suivantes :
- liaison du dispositif d'alimentation en énergie (2) à un réseau d'énergie supérieur ou à un dispositif d'alimentation en énergie supérieur ;
- détection de l'appareil (3) à alimenter par le dispositif d'alimentation en énergie (2) au moyen d'au moins un système de détection de position (24, 31) ;
- identification de l'appareil (3) à alimenter ;
- orientation du dispositif d'alimentation en énergie (2) ou du rayon d'énergie sur l'appareil (3) à alimenter ;
- transmission sans fil d'énergie à l'appareil (3) à alimenter.
